(19) Europäisches Patentamt / European Patent Office / Office européen des brevets

(11) **EP 4 679 909 A1**

(12) **EUROPEAN PATENT APPLICATION**
published in accordance with Art. 153(4) EPC

(43) Date of publication:
**14.01.2026 Bulletin 2026/03**

(21) Application number: 23925708.2

(22) Date of filing: **06.03.2023**

(51) International Patent Classification (IPC):
*H04W 72/044* (2023.01)

(52) Cooperative Patent Classification (CPC):
**H04W 72/044; H04W 72/0453; H04W 72/1268; H04W 72/21**

(86) International application number:
**PCT/CN2023/079941**

(87) International publication number:
**WO 2024/182983 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **INFORMATION REPORTING METHOD AND APPARATUS, INFORMATION RECEIVING METHOD AND APPARATUS, DEVICE, AND MEDIUM**

(57) The present disclosure relates to the technical field of communications, and relates to an information reporting method and apparatus, an information receiving method and apparatus, a device, a medium, and a program product. The information reporting method is executed by a terminal. The method comprises: reporting first information and second information, wherein the first information is used for indicating beam information of at least one beam pair, and the second information is used for indicating the maximum number of SRS ports supported by at least two panels corresponding to the at least one beam pair. The method achieves the addition of reported content related to the beam pair.

321

reporting first information and second information

Fig. 3c

**Description**

**FIELD**

The present disclosure relates to the field of communication technologies, and in particular, to an information reporting method, an information receiving method, an apparatus, a device, a medium and a program product.

**BACKGROUND**

To ensure transmission reliability and throughput, simultaneous uplink transmission towards multiple Transmission and Reception Points (TRPs) is achieved through a multi-panel terminal.

**SUMMARY**

Embodiments of the present disclosure propose an information reporting method, an information receiving method, an apparatus, a device, a medium, and a program product. The technical solution at least includes:
According to a first aspect of embodiments of the present disclosure, an information reporting method is provided, performed by a terminal, including:

reporting first information and second information;
where the first information is used to indicate beam information of at least one beam pair, and the second information is used to indicate a maximum quantity of Sounding Reference Signal (SRS) ports supported by at least two panels corresponding to the at least one beam pair.

According to a second aspect of embodiments of the present disclosure, an information receiving method is provided, performed by a network device, including:

receiving first information and second information reported by a terminal;
where the first information is used to indicate beam information of at least one beam pair, and the second information is used to indicate a maximum quantity of SRS ports supported by at least two panels corresponding to the at least one beam pair.

According to a third aspect of embodiments of the present disclosure, an information reporting method and receiving method are provided, used in a communication system, where the communication system includes a terminal and a network device, the method includes:

the terminal reporting first information and second information;
the network device receiving the first information and the second information reported by the terminal;
where the first information is used to indicate beam information of at least one beam pair, and the second information is used to indicate a maximum quantity of SRS ports supported by at least two panels corresponding to the at least one beam pair.

According to a fourth aspect of embodiments of the present disclosure, an information reporting apparatus is provided, including:

a reporting module, configured to report first information and second information;
where the first information is used to indicate beam information of at least one beam pair, and the second information is used to indicate a maximum quantity of SRS ports supported by at least two panels corresponding to the at least one beam pair.

According to a fifth aspect of embodiments of the present disclosure, an information receiving apparatus is provided, including:

a receiving module, configured to receive first information and second information reported by a terminal;
where the first information is used to indicate beam information of at least one beam pair, and the second information is used to indicate a maximum quantity of SRS ports supported by at least two panels corresponding to the at least one beam pair.

According to a sixth aspect of embodiments of the present disclosure, a communication device is provided, including:

one or more processors;
where the processor is configured to call instructions to cause the communication device to perform the information reporting method and the receiving method according to the various aspects described above.

According to a seventh aspect of embodiments of the present disclosure, a communication system is provided, the communication system including a terminal and a network device, where the terminal is configured to implement the information reporting method according to the various aspects described above, and the network device is configured to implement the information receiving method according to the various aspects described above.

According to an eighth aspect of embodiments of the present disclosure, a storage medium is provided, having instructions stored thereon, where when the instructions are run on a communication device, the communication device is caused to perform the information reporting method and the receiving method according to the various aspects described above.

According to a ninth aspect of embodiments of the present disclosure, a program product is provided, where when the program product is executed by a communication device, the communication device is caused to perform the information reporting method and the receiving method according to the various aspects described above.

## BRIEF DESCRIPTION OF THE DRAWINGS

To describe the technical solutions in the embodiments of the present disclosure more clearly, the following briefly introduces the drawings required for describing the embodiments. Obviously, the drawings in the following description show merely some embodiments of the present disclosure, and do not specifically limit the scope of the present disclosure.

FIG. 1a is a schematic structural diagram of a communication system according to an embodiment of the present disclosure;
FIG. 1b is a schematic interaction diagram of a communication system according to an embodiment of the present disclosure;
FIG. 1c is a schematic interaction diagram of a communication system according to an embodiment of the present disclosure;
FIG. 1d is a schematic flowchart of a codebook-based uplink transmission method according to an embodiment of the present disclosure;
FIG. 1e is a schematic flowchart of a non-codebook-based uplink transmission method according to an embodiment of the present disclosure;
FIG. 2 is a schematic interaction diagram of an information reporting method and/or an information receiving method according to an embodiment of the present disclosure;
FIG. 3a is a schematic interaction diagram of an information reporting method according to an embodiment of the present disclosure;
FIG. 3b is a schematic interaction diagram of an information reporting method according to an embodiment of the present disclosure;
FIG. 3c is a schematic interaction diagram of an information reporting method according to an embodiment of the present disclosure;
FIG. 3d is a schematic interaction diagram of an information reporting method according to an embodiment of the present disclosure;
FIG. 3e is a schematic interaction diagram of an information reporting method according to an embodiment of the present disclosure;
FIG. 4a is a schematic interaction diagram of an information receiving method according to an embodiment of the present disclosure;
FIG. 4b is a schematic interaction diagram of an information receiving method according to an embodiment of the present disclosure;
FIG. 4c is a schematic interaction diagram of an information receiving method according to an embodiment of the present disclosure;
FIG. 4d is a schematic interaction diagram of an information receiving method according to an embodiment of the present disclosure;
FIG. 5a is a schematic structural diagram of an information reporting apparatus according to an embodiment of the present disclosure;
FIG. 5b is a schematic structural diagram of an information receiving apparatus according to an embodiment of the present disclosure;

FIG. 6a is a schematic structural diagram of a communication device according to an embodiment of the present disclosure; and

FIG. 6b is a schematic structural diagram of a chip according to an embodiment of the present disclosure.

**DETAILED DESCRIPTION**

To make the objectives, technical solutions, and advantages of the present disclosure clearer, the following further describes the implementations in detail with reference to the drawings.

To further optimize beam information reporting, embodiments of the present disclosure provide an information reporting method and receiving method, an apparatus, a device, a medium, and a program product.

In a first aspect, an embodiment of the present disclosure provides an information reporting method performed by a terminal, the method includes:

reporting first information and second information;

where the first information is used to indicate beam information of at least one beam pair, and the second information is used to indicate a maximum quantity of SRS ports supported by at least two panels corresponding to the at least one beam pair.

In the above embodiment, by reporting the second information, the types of reporting information related to beam pairs are increased, thereby facilitating the implementation or support of scenarios such as uplink multi-panel transmission.

In some embodiments, combined with the first aspect, the second information includes:

second information corresponding respectively to the at least one beam pair.

In the above embodiment, a reporting is performed for the case where the second information corresponding to the beam pairs are different, thereby making the reporting more precise and accurate.

In some embodiments, combined with the first aspect, the second information includes:

one piece of second information corresponding to the at least one beam pair.

In the above embodiment, deduplicated reporting is performed for the case where the second information corresponding to the beam pairs are the same, thereby saving the signaling overhead.

In some embodiments, combined with the first aspect, each piece of the second information occupies 2 bits.

In the above embodiment, occupying 2 bits is selected according to the actual situation, which can meet the reporting requirements under different circumstances.

In some embodiments, combined with the first aspect, each beam pair in the at least one beam pair is a beam pair supporting uplink simultaneous transmission or a beam pair supporting uplink non-simultaneous transmission.

In the above embodiment, each beam pair in the at least one beam pair supports uplink simultaneous transmission or supports uplink non-simultaneous transmission, thereby broadening the scope of application.

In some embodiments, combined with the first aspect, the at least two panels are homogeneous panels; or, the at least two panels support the same maximum quantity of SRS ports.

In the above embodiment, selecting the at least two panels as homogeneous panels or selecting the at least two panels to support the same maximum quantity of SRS ports according to the actual situation can reduce system complexity.

In some embodiments, combined with the first aspect, the method includes at least one of:

in a case where the second information of a first beam pair has been reported, not reporting the second information of the first beam pair again;

in a case where the second information of a first beam pair is not changed, not reporting the second information of the first beam pair again;

in a case where third information of a first beam pair is not changed, not reporting the second information of the first beam pair again;

where the first beam pair includes one or more beam pairs of the at least one beam pair.

In the above embodiment, in the case where the second information has been reported, or the second information has not changed, or the third information has not changed, the second information is not reported again, thereby reducing repeated reporting and saving overhead.

In some embodiments, combined with the first aspect, reporting the first information and the second information includes:

reporting fourth information, where the fourth information carries the first information and the second information.

In the above embodiment, by reporting the fourth information carrying the first information and the second information, the quantity of reported information is optimized.

In some embodiments, combined with the first aspect, the fourth information is at least one of:

    a group-based beam report;
    a group-based downlink beam report; or
    a group-based uplink beam report.

In the above embodiment, by reporting the group-based beam report, the downlink beam reporting mechanism is reused, and there is no need to design a new signaling format.

By reporting the group-based downlink beam report, the downlink beam reporting mechanism is reused, and there is no need to design a new signaling format.

By reporting the group-based uplink beam report, a newly designed signaling format is adopted, which can be distinguished from the downlink beam report, thereby improving the reporting flexibility of the uplink beam report.

In some embodiments, combined with the first aspect, reporting the first information and the second information includes:

    in a case where a first parameter is configured to be enabled, reporting the first information and the second information;
    where the first parameter is a parameter related to a reporting configuration of the second information.

In the above embodiment, by using the first parameter related to the reporting configuration of the second information, the differentiation capability of beam pairs is improved.

In a second aspect, an embodiment of the present disclosure provides an information receiving method, performed by a network device, the method includes:

    receiving first information and second information reported by a terminal;
    where the first information is used to indicate beam information of at least one beam pair, and the second information is used to indicate a maximum quantity of SRS ports supported by at least two panels corresponding to the at least one beam pair.

In some embodiments, combined with the second aspect, the second information includes:
second information corresponding respectively to the at least one beam pair.

In some embodiments, combined with the second aspect, the second information includes:
one piece of second information corresponding to the at least one beam pair.

In some embodiments, combined with the second aspect, each piece of the second information occupies 2 bits.

In some embodiments, combined with the second aspect, each beam pair in the at least one beam pair is a beam pair supporting uplink simultaneous transmission or a beam pair supporting uplink non-simultaneous transmission.

In some embodiments, combined with the second aspect, the at least two panels are homogeneous panels; or, the at least two panels support the same maximum quantity of SRS ports.

In some embodiments, combined with the second aspect, receiving the first information and the second information reported by the terminal includes:
receiving fourth information reported by the terminal, where the fourth information carries the first information and the second information.

In some embodiments, combined with the second aspect, the fourth information is at least one of:

    a group-based beam report;
    a group-based downlink beam report; or
    a group-based uplink beam report.

In the above embodiment, by receiving the group-based beam report, the downlink beam reporting mechanism is reused, and there is no need to design a new signaling format;
by receiving the group-based uplink beam report, a newly designed signaling format is adopted, which can be distinguished from the downlink beam report, thereby improving the reporting flexibility of the uplink beam report.

In some embodiments, combined with the second aspect, receiving the first information and the second information reported by the terminal includes:

    in a case where a first parameter is configured to be enabled, receiving the first information and the second information reported by the terminal;

where the first parameter is a parameter related to the reporting configuration of the second information.

In a third aspect, an embodiment of the present disclosure provides an information reporting method and receiving method, used in a communication system, where the communication system includes a terminal and a network device, the method includes:

the terminal reporting first information and second information;

the network device receiving the first information and the second information reported by the terminal;

where the first information is used to indicate beam information of at least one beam pair, and the second information is used to indicate a maximum quantity of SRS ports supported by at least two panels corresponding to the at least one beam pair.

In some embodiments, combined with the third aspect, the second information includes: second information corresponding respectively to the at least one beam pair.

In some embodiments, combined with the third aspect, the second information includes: one piece of second information corresponding to the at least one beam pair.

In some embodiments, combined with the third aspect, each piece of the second information occupies 2 bits.

In some embodiments, combined with the third aspect, each beam pair in the at least one beam pair is a beam pair supporting uplink simultaneous transmission or a beam pair supporting uplink non-simultaneous transmission.

In some embodiments, combined with the third aspect, the at least two panels are homogeneous panels; or, the at least two panels support the same maximum quantity of SRS ports.

In some embodiments, combined with the third aspect, the method includes at least one of:

in a case where the second information of a first beam pair has been reported, the terminal does not report the second information of the first beam pair again;

in a case where the second information of a first beam pair is not changed, the terminal does not report the second information of the first beam pair again;

in a case where third information of a first beam pair is not changed, the terminal does not report the second information of the first beam pair again;

where the first beam pair includes one or more beam pairs of the at least one beam pair.

In some embodiments, combined with the third aspect, the method includes:

the terminal reporting fourth information;

the network device receiving the fourth information reported by the terminal;

where the fourth information carries the first information and the second information.

In some embodiments, combined with the third aspect, the fourth information is at least one of:

a group-based beam report;

a group-based downlink beam report; or

a group-based uplink beam report.

In some embodiments, combined with the third aspect, the method includes:

in a case where a first parameter is configured to be enabled, the terminal reporting the first information and the second information;

in a case where a first parameter is configured to be enabled, the network device receiving the first information and the second information reported by the terminal;

where the first parameter is a parameter related to the reporting configuration of the second information.

In a fourth aspect, an embodiment of the present disclosure provides an information reporting apparatus, the apparatus including:

a reporting module, configured to report first information and second information;

where the first information is used to indicate beam information of at least one beam pair, and the second information is used to indicate a maximum quantity of SRS ports supported by at least two panels corresponding to the at least one beam pair.

In some embodiments, combined with the fourth aspect, the second information includes:
second information corresponding respectively to the at least one beam pair.

In some embodiments, combined with the fourth aspect, the second information includes:
one piece of second information corresponding to the at least one beam pair.

In some embodiments, combined with the fourth aspect, each piece of the second information occupies 2 bits.

In some embodiments, combined with the fourth aspect, each beam pair in the at least one beam pair is a beam pair supporting uplink simultaneous transmission or a beam pair supporting uplink non-simultaneous transmission.

In some embodiments, combined with the fourth aspect, the at least two panels are homogeneous panels; or, the at least two panels support the same maximum quantity of SRS ports.

In some embodiments, combined with the fourth aspect:

the reporting module is configured to, in a case where the second information of a first beam pair has been reported, not report the second information of the first beam pair again;
the reporting module is configured to, in a case where the second information of a first beam pair is not changed, not report the second information of the first beam pair again;
the reporting module is configured to, in a case where third information of a first beam pair is not changed, not report the second information of the first beam pair again;
where the first beam pair includes one or more beam pairs of the at least one beam pair.

In some embodiments, combined with the fourth aspect, the reporting module is configured to report fourth information, where the fourth information carries the first information and the second information.

In some embodiments, combined with the fourth aspect, the fourth information is at least one of:

a group-based beam report;
a group-based downlink beam report; or
a group-based uplink beam report.

In some embodiments, combined with the fourth aspect, the reporting module is configured to, in a case where a first parameter is configured to be enabled, report the first information and the second information;
where the first parameter is a parameter related to the reporting configuration of the second information.

In a fifth aspect, an embodiment of the present disclosure provides an information receiving apparatus, the apparatus including:

a receiving module, configured to receive first information and second information reported by a terminal;
where the first information is used to indicate beam information of at least one beam pair, and the second information is used to indicate a maximum quantity of SRS ports supported by at least two panels corresponding to the at least one beam pair.

In some embodiments, combined with the fifth aspect, the second information includes:
second information corresponding respectively to the at least one beam pair.

In some embodiments, combined with the fifth aspect, the second information includes:
one piece of second information corresponding to the at least one beam pair.

In some embodiments, combined with the fifth aspect, each piece of the second information occupies 2 bits.

In some embodiments, combined with the fifth aspect, each beam pair in the at least one beam pair is a beam pair supporting uplink simultaneous transmission or a beam pair supporting uplink non-simultaneous transmission.

In some embodiments, combined with the fifth aspect, the at least two panels are homogeneous panels; or, the at least two panels support the same maximum quantity of SRS ports.

In some embodiments, combined with the fifth aspect, the receiving module is configured to receive fourth information reported by the terminal, where the fourth information carries the first information and the second information.

In some embodiments, combined with the fifth aspect, the fourth information is at least one of:

a group-based beam report;
a group-based downlink beam report; or
a group-based uplink beam report.

In some embodiments, combined with the fifth aspect, the receiving module is configured to, in a case where a first parameter is configured to be enabled, receive the first information and the second information reported by the terminal;

where the first parameter is a parameter related to the reporting configuration of the second information.

In a sixth aspect, an embodiment of the present disclosure provides a communication device, the communication device including: one or more processors; one or more memories for storing instructions; where the processor is configured to call the instructions to cause the communication device to perform the information reporting method and the receiving method as described in the first aspect and the second aspect, and the optional implementations of the first aspect and the second aspect.

In a seventh aspect, an embodiment of the present disclosure provides a communication system, the communication system including a terminal and a network device, where the terminal is configured to perform the information reporting method as described in the first aspect and the optional implementations of the first aspect, and the network device is configured to perform the information receiving method as described in the second aspect and the optional implementations of the second aspect.

In an eighth aspect, an embodiment of the present disclosure provides a storage medium, the storage medium storing instructions, where when the instructions are run on a communication device, the communication device is caused to perform the method as described in the first aspect and the second aspect, and the optional implementations of the first aspect and the second aspect.

In a ninth aspect, an embodiment of the present disclosure provides a program product, where when the program product is executed by a communication device, the communication device is caused to perform the method as described in the first aspect and the second aspect, and the optional implementations of the first aspect and the second aspect.

It can be understood that the above information reporting apparatus, information receiving apparatus, communication device, communication system, storage medium, and program product are all used to perform the method provided by the embodiments of the present disclosure. Therefore, the beneficial effects that can be achieved can be referred to the beneficial effects in the corresponding methods, and will not be repeated here.

The embodiments of the present disclosure are not exhaustive, but only illustrate some embodiments, and do not specifically limit the scope of the present disclosure. In the case of no contradiction, each step in a certain embodiment can be implemented as an independent embodiment, and the steps can be arbitrarily combined. For example, the solution after removing some steps in a certain embodiment can also be implemented as an independent embodiment, and the order of the steps in a certain embodiment can be arbitrarily exchanged. In addition, the optional implementation manners in a certain embodiment can be arbitrarily combined; furthermore, the embodiments can be arbitrarily combined. For example, part or all of the steps of different embodiments can be arbitrarily combined, and a certain embodiment can be arbitrarily combined with the optional implementation manners of other embodiments.

The terms used in the embodiments of the present disclosure are only for the purpose of describing specific embodiments, and are not intended to limit the present disclosure.

The singular expressions "a", "an", "the", "said", "the above", "the foregoing", "this", etc. in the embodiments of the present disclosure also include plural expressions, unless the context clearly indicates otherwise. In the embodiments of the present disclosure, "a plurality of" means two or more.

The prefix words such as "first", "second", etc. in the embodiments of the present disclosure are only used to distinguish different described objects, and do not constitute limitations on the position, order, priority, quantity, or content of the described objects. The description of the described objects refers to the description in the claims or the context of the embodiments, and should not constitute unnecessary limitations due to the use of the prefix words. For example, if the described object is "field", the ordinal numbers before "field" in "first field" and "second field" do not limit the position or order between the "fields", and "first" and "second" do not limit whether the modified "fields" are in the same message, nor do they limit the sequence of "first field" and "second field". For another example, if the described object is "level", the ordinal numbers before "level" in "first level" and "second level" do not limit the priority between the "levels". For another example, the quantity of the described object is not limited by the ordinal number, and may be one or more. Taking "first device" as an example, the quantity of "device" may be one or more. In addition, objects modified by different prefix words may be the same or different. For example, if the described object is "device", "first device" and "second device" may be the same device or different devices, and their types may be the same or different; for another example, if the described object is "information", "first information" and "second information" may be the same information or different information, and their content may be the same or different.

Descriptive manners such as "at least one of A, B, C, ...", "A and/or B and/or C, ..." in the embodiments of the present disclosure include the case where any one of A, B, C, ... exists alone, and also include the case of any combination of any multiple of A, B, C, ..., and each case may exist alone; for example, "at least one of A, B, and C" includes the cases of A alone, B alone, C alone, combination of A and B, combination of A and C, combination of B and C, and combination of A, B, and C; for example, A and/or B includes the cases of A alone, B alone, and combination of A and B.

In some embodiments, recording manners such as "in the case of A, in the case of B", "in response to the case of A, in response to the case of B", etc., may include the following technical solutions according to the situation: executing A regardless of B, that is, in some embodiments, A; executing B regardless of A, that is, in some embodiments, B; selectively executing A or B, that is, in some embodiments, selecting to execute from A and B; executing both A and B, that is, in some embodiments, A and B. When there are more branches such as A, B, C, etc., it is similar to the above.

In some embodiments, "including A", "containing A", "used to indicate A", "carrying A" may be interpreted as directly carrying A, or may be interpreted as indirectly indicating A.

In some embodiments, terms such as "in response to ...", "in response to determining ...", "in the case of ...", "when ...", "if ...", etc. may be replaced with each other.

In some embodiments, terms such as "greater than", "greater than or equal to", "above", "higher than", "not less than", etc. may be replaced with each other, and terms such as "less than", "less than or equal to", "below", "lower than", "not greater than", etc. may be replaced with each other.

In some embodiments, terms such as "radio", "wireless", "Radio Access Network (RAN)", "Access Network (AN)", "RAN-based", etc. may be replaced with each other.

In some embodiments, "predetermined" and "preset" may be interpreted as pre-specified in the protocol, or may be interpreted as an action pre-set by a device, etc. In some embodiments, the name of a device, etc. is not limited to the name recorded in the embodiments. Terms such as "apparatus", "equipment", "device", "network element", "node", "function", "unit", "entity", "system", "chip", "chip system", "subject", etc. may be replaced with each other.

In some embodiments, the name of information, etc. is not limited to the name recorded in the embodiments. Terms such as "information", "message", "signaling", "report", "indication", "data", etc. may be replaced with each other.

In some embodiments, "acquiring", "obtaining", "receiving" may be interpreted as receiving from another subject, acquiring from a protocol, obtaining by self-processing, and other meanings.

In some embodiments, acquiring data, information, etc. may comply with the laws and regulations of the country where it is located.

In some embodiments, data, information, etc. may be acquired after the user agrees.

In addition, each element, each row, or each column in the tables of the embodiments of the present disclosure may be implemented as an independent embodiment, and any combination of elements, rows, or columns may also be implemented as an independent embodiment.

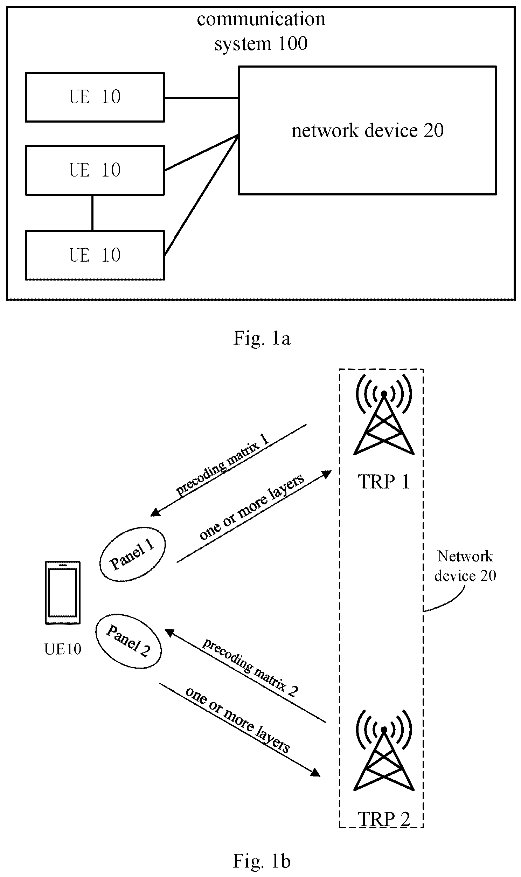

FIG. 1a is a schematic structural diagram of a communication system 100 according to an embodiment of the present disclosure. The communication system 100 may include: a terminal 10 and a network device 20.

In some embodiments, the terminal 10 is, for example, User Equipment (UE), an access terminal, a subscriber unit, a subscriber station, a mobile station, a mobile platform, a remote station, a remote terminal, a mobile device, a wireless communication device, a user agent, or a user apparatus. In an embodiment, the terminal 10 may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal in a fifth-generation mobile communication system (5th Generation System, 5GS), or a terminal in a future evolved Public Land Mobile Network (PLMN) or a terminal in a historical evolution stage, etc., which is not limited in the embodiments of the present application. For convenience of description, the above devices are collectively referred to as terminals. The number of terminals 10 is usually multiple, and one or more terminals 10 may be distributed in a cell managed by each access network device. In the embodiments of the present disclosure, the terminal may be referred to as a terminal for short.

In some embodiments, the network device 20 may include an access network device.

In some embodiments, the network device 20 may include a core network device.

In some embodiments, the network device 20 may include an access network device and a core network device.

In some embodiments, the access network device is a device deployed in an access network to provide wireless communication functions for the terminal 10. The access network device may include various forms of macro base stations, micro base stations, relay stations, access points, etc., but is not limited thereto. In systems using different wireless access technologies, the name of the device having the function of the access network device may be different. For example, in a fifth-generation New Radio (5G NR) system, it is called a next-generation base station (gNodeB, gNB). As communication technology evolves, the name "access network device" may change. For convenience of description, in the embodiments of the present application, the above devices that provide wireless communication functions for the terminal 10 are collectively referred to as access network devices. In an embodiment, through the access network device, a communication relationship can be established between the terminal 10 and the core network device. For example, in a Long Term Evolution (LTE) system, the access network device may be an Evolved Universal Terrestrial Radio Access Network (EUTRAN) or one or more evolved base stations in the EUTRAN; in a 5G NR system, the access network device may be a Radio Access Network (RAN) or one or more gNBs in the RAN.

In some embodiments, the core network device may be a device deployed in a core network, having functions such as a first network element, a second network element, a third network element, etc., or may be multiple devices or device groups, respectively having all or part of the functions of the first network element, the second network element, the third network element, etc. The network element may be virtual or physical.

The following embodiments of the present disclosure may be applied to the communication system 100 or part of the entities shown in FIG. 1a, but are not limited thereto. The entities shown in FIG. 1a are examples. The communication system 100 may include all or part of the entities in FIG. 1a, and may also include other entities not shown in FIG. 1a. The number of entities is arbitrary. The connection relationships between the entities are examples. The entities may be connected or not connected. The connection may be in any manner, may be direct connection or indirect connection, and may be wired connection or wireless connection. In addition, the names of the communication system 100 and the entities are not limited.

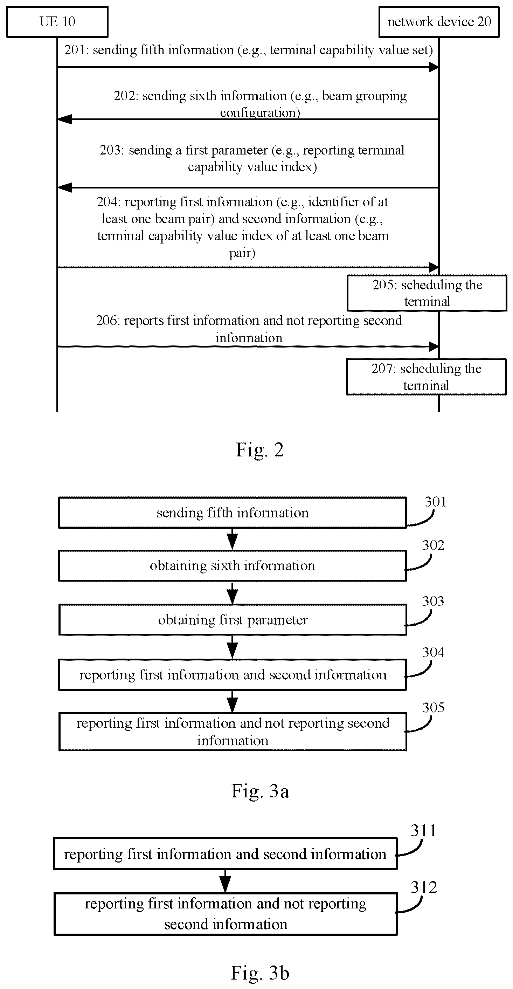

FIG. 1b is a schematic interaction diagram of a communication system according to an embodiment of the present disclosure. The communication system may include: a terminal 10 and a network device 20, where the network device 20 includes a Transmission and Reception Point (TRP) 1 and a TRP 2. FIG. 2 only uses two TRPs as an example, but in practice there may be more TRPs, which is not limited in the present disclosure.

There are two communication scenarios between the terminal 10 and the network device 20: an uplink communication scenario and a downlink communication scenario. Here, uplink communication refers to the terminal 10 sending signals to the network device 20; downlink communication refers to the network device 20 sending signals to the terminal 10.

Some embodiments of the present disclosure do not consider the Multi-Transmission and Reception Point (M-TRP) scenario, and uplink transmission is for a single TRP. Some embodiments of the present disclosure enhance uplink M-TRP transmission under Single Downlink Control Information (S-DCI). The uplink Physical Uplink Shared Channel (PUSCH) transmission is directed towards the TRPs of multiple network devices 20. In some embodiments of the present disclosure, cooperative transmission in Time Division Multiplexing (TDM) transmission mode is standardized. Repetitions of the same information on the PUSCH are sent to different TRPs of the network device 20 at different Transmission Occasions (TOs) in the time domain. This method has relatively low requirements on the capability of the terminal 10, does not require the ability to support simultaneous transmission beams, but has a large transmission delay.

For the uplink, the PUSCH channels facing different TRPs may have very different spatial characteristics of the actual channels. Therefore, it is considered that the spatial reception parameters of the PUSCH channels are different for different transmission directions.

In the enhancement objectives of some embodiments of the present disclosure, it is mainly hoped to achieve simultaneous cooperative transmission through multiple panels of the terminal 10 towards the TRP directions of multiple network devices 20 to increase transmission reliability and throughput, while effectively reducing transmission delay under multi-TRP, but it requires the terminal 10 to have the ability to transmit multiple beams simultaneously. PUSCH transmission can be based on multi-panel to multi-TRP transmission scheduled by a single Physical Downlink Control Channel (PDCCH), i.e., S-DCI.

As shown in FIG. 1b, a Downlink Control Information (DCI) directly or indirectly schedules precoding matrix 1 and precoding matrix 2 to the terminal 10. The terminal 10 uses panel 1 based on precoding matrix 1 to send one or more layers of uplink data to TRP1. The terminal 10 uses panel 2 based on precoding matrix 2 to send one or more layers of uplink data to TRP2.

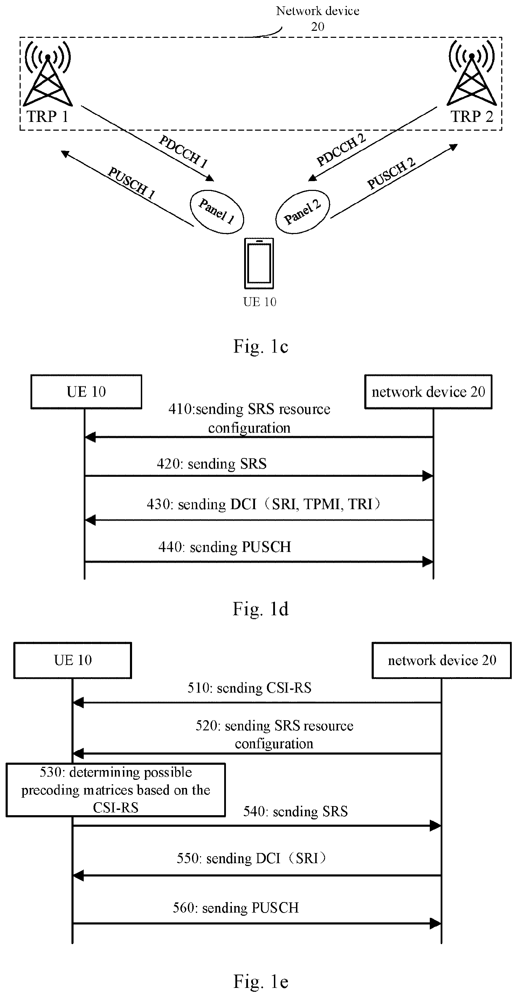

FIG. 1c is a schematic interaction diagram of a communication system according to an embodiment of the present disclosure. PUSCH transmission can also be based on multi-panel to multi-TRP transmission scheduled by different PDCCHs, i.e., Multi-Downlink Control Information (M-DCI).

TRP1 sends a first DCI to the terminal 10 through PDCCH1, scheduling the terminal 10 to use panel 1 to send PUSCH1 to TRP1; TRP2 sends a second DCI to the terminal 10 through PDCCH2, scheduling the terminal 10 to use panel 2 to send PUSCH2 to TRP2.

The above TRP1 and TRP2 may be two TRPs of the same cell, or two TRPs of different cells.

In actual deployment, the link between TRPs may be an ideal backhaul link supporting high throughput and very low backhaul delay, or a non-ideal backhaul link using methods such as x Digital Subscriber Line (xDSL), microwave, and relay. The Non-Coherent Joint Transmission (NC-JT) transmission scheme based on M-DCI is mainly for non-ideal backhaul links, but this scheme can also be used for ideal backhaul links.

Terminals are generally configured with multiple panels, and the capabilities of different panels may also be different. For example, they have different numbers of SRS ports, and the supported maximum number of data transmission layers may not be the same. For example, one panel supports a maximum of 2 layers of transmission, and another panel supports a maximum of 4 layers of transmission. The network scheduler will determine whether the terminal is currently suitable for uplink simultaneous transmission of multiple panels. If the terminal is currently suitable for uplink simultaneous transmission of multiple panels and is scheduled, the network device will directly or indirectly indicate relevant transmission parameters, including specific beam indication information of the terminal, the number of data layers used for transmission, the allocation of Demodulation Reference Signal (DMRS) ports used, and precoding indication information, etc.

Simultaneous Transmission via Multi-Panel (STxMP) for S-DCI-based PUSCH supported transmission schemes includes:

(1) Space Division Multiplexing (SDM) scheme: Different parts of one Transport Block (TB) of the PUSCH are respectively sent on the same time-frequency resources towards two different TRPs through their respective allocated DMRS ports or port combinations on different panels. Different panels/TRPs/TOs are associated with different Transmission Configuration Indication states (TCI states), i.e., beams;

(2) Single Frequency Network (SFN) multiplexing scheme: One TB of the PUSCH is sent on the same time-frequency resources towards two different TRPs through the same DMRS ports or port combinations allocated on different panels. Different panels/TRPs/TOs are associated with different TCI states, i.e., beams.

Terminal Uplink Panel Selection:

In some embodiments of the present disclosure, to support uplink panel selection, an enhanced beam reporting scheme is supported, that is, the function of notifying the terminal of the selected panel for uplink transmission by updating the Uplink TCI state (UL TCI state). For multi-panel terminals, a set of terminal capability values that can be used for uplink transmission is defined, and the terminal reports this set. The elements in the set include the maximum number of SRS ports supported by each panel of the terminal. Here, it is assumed that the maximum number of SRS ports corresponds to the maximum number of uplink transmission layers supported. Assuming that the terminal has four panels, and the corresponding maximum numbers of SRS ports are 1, 2, 2, and 4 respectively, the maximum port numbers corresponding to the heterogeneous panels are reported, and the terminal capability set is reported as {1, 2, 4}.

Some embodiments of the present disclosure add a terminal capability value reporting function in beam management, that is, the panel used for transmitting a given beam may change dynamically. Therefore, the maximum number of SRS ports corresponding to the panel capability will also change accordingly. Therefore, the UE reports this maximum number together with Layer 1 Reference Signal Received Power (L1-RSRP) in UCI.

When the network device receives the beam information Channel State Information-Reference Signal (CSI-RS) Resource Indicator (CRI)/Synchronization Signal Block Resource Indicator (SSBRI) + L1-RSRP/L1 Signal to Interference plus Noise Ratio (L1-SINR) corresponding to a certain capability value set (UE capability value set index) reported by the terminal, that is, reports CRI/SSBRI + L1-RSRP/L1-SINR + UE capability value set index, the network device updates the Quasi Co-Location Type D (QCL Type D) reference signal source (QCL TypeD source Reference Signal, QCL TypeD source RS) in the UL TCI state with the CSI-RS or Synchronization Signal Block (SSB) recommended by the terminal. After receiving the UL TCI state configuration notification from the network device, the terminal uses the same panel as the reception spatial relation reference signal source as the transmission panel to send the target PUSCH/Physical Uplink Control Channel (PUCCH) according to the indication of the network device.

The terminal capability value set (UE capability set) reported by the terminal may include the maximum number of SRS ports supported by each panel. Each pair of CRI/SSBRI + L1-RSRP/L1-SINR in the beam report corresponds to a terminal capability value set index (UE capability set ID), referred to as terminal capability value index for short.

In the STxMP scenario, the multi-antenna precoding of PUSCH supports two different mode configurations: one is codebook-based transmission, and the other is non-codebook-based transmission. Generally, the mode is selected based on whether the reciprocity of the uplink and downlink channels holds. Both precoding modes require the terminal to send a Sounding Reference Signal (SRS) for the base station to estimate the uplink Channel State Information (CSI).

(1) Codebook-based transmission;

In codebook-based transmission, the terminal needs to configure at most one SRS resource set for codebook-based uplink transmission. The SRS resource set can be configured with multiple SRS resources. The network device side will feed back $\lceil log_2(N_{SRS}) \rceil$ bits of SRS Resource Indication (SRI), where "⌈ ⌉" means rounding up. The SRI indication is used to select the SRS resource. Finally, the network device determines the Transmitted Precoding Matrix Indicator (TPMI) and Transmitted Rank Indicator (TRI) actually used for transmission by the terminal based on the measurement of the uplink CSI and notifies the terminal. The data in the subsequent uplink transmission of the terminal needs to be precoded using the TPMI and TRI specified by the network device. Meanwhile, the precoded data is mapped to the corresponding antenna ports according to the spatial filter corresponding to the SRS resource indicated by the SRI. Different SRSs use different spatial filters for transmission. Therefore, the precoded data of the terminal needs to be filtered by the spatial filter used by the SRS indicated by the SRI. In this way, transmission from a single layer to full rank can be supported.

FIG. 1d is a schematic flowchart of a codebook-based uplink transmission method according to an embodiment of the present disclosure. This embodiment of the present disclosure relates to a codebook-based uplink transmission method, performed by a terminal 10 and a network device 20. The method includes:

In Step 410, the network device 20 sends an SRS resource configuration.

In the codebook-based uplink transmission process, the network device 20 sends the SRS resource configuration to the terminal 10. The SRS resource configuration includes at least one SRS resource and the time-frequency resource location of each SRS resource.

In Step 420, the terminal 10 sends an SRS.

The terminal 10 sends at least one SRS to the network device 20 based on the SRS resource configuration.

In Step 430, the network device 20 sends DCI.

The network device 20 obtains the channel conditions of each uplink channel based on the received at least one SRS and sends DCI to the terminal 10. The DCI includes at least SRI, TPMI, and TRI.

In Step 440, the terminal 10 sends a PUSCH.

The terminal 10 sends the PUSCH to the network device 20 based on the SRI and TPMI.

Table 1 shows an example of the SRI indication method for multiple SRS resources. Table 2 shows the signaling indication methods for TPMI and TRI for single-layer transmission with 4 antenna ports as an example, indicating for different UE capabilities respectively. Here, UE capabilities are divided into three types: fully correlated, partially correlated, and uncorrelated, representing the correlation capability of the antenna ports. Table 3 corresponds to the codeword for single-layer transmission with 4 antenna ports.

Table 1

| bit field mapped to index | SRI(s), $N_{SRS}=2$ |
|---|---|
| 0 | 0 |
| 1 | 1 |

Table 2

| bit field mapped to index | SRI(s), $N_{SRS}=3$ |
|---|---|
| 0 | 0 |
| 1 | 1 |
| 2 | 2 |
| 3 | reserved |

Table 3

| bit field mapped to index | SRI(s), $N_{SRS}=4$ |
|---|---|
| 0 | 0 |
| 1 | 1 |
| 2 | 2 |
| 3 | 3 |

Not all terminals can calibrate all antenna ports for coherent transmission. The codebook design for uplink transmission needs to consider the antenna coherent transmission capability of the terminal. The NR system defines three types of antenna coherent transmission capabilities for terminals:

full coherent: all antennas of the terminal can transmit coherently;
partial coherent: antennas within the same coherent transmission pair can transmit coherently, but different coherent transmission pairs cannot transmit coherently;
non-coherent: no antennas of the terminal can transmit coherently.

The NR system allows the network device to configure at most 2 SRS resources for the terminal for channel sounding of codebook-based uplink transmission. The 2 SRS resources contain the same number of SRS antenna ports and have the same time domain type, that is, both SRS resources are periodic SRS, or semi-persistent SRS, or aperiodic SRS. The NR system does not support the network device indicating multiple SRS resources for the terminal for codebook-based uplink transmission. When the network device configures 2 SRS resources for the terminal for codebook-based uplink transmission, the network device indicates one SRS resource corresponding to TPMI/TRI to the terminal through SRI.

(2) Non-codebook-based transmission;

For non-codebook-based uplink transmission, the terminal 10 sends a capability of the maximum number of SRS resources that can be transmitted simultaneously to the network device 20. When the network device 20 indicates SRI to the terminal 10 in slot n, the corresponding SRS resource transmission is the most recent SRS transmission before slot n.

The terminal 10 determines the limitation of the precoding indication according to the maximum rank (maxRank) in the higher layer parameter PUSCH configuration (PUSCH-Config). The number of SRS resources indicated by SRI is not greater than maxRank.

The network device 20 can configure an associated CSI-RS resource for the SRS resource set used for non-codebook-based uplink transmission for channel measurement. The terminal 10 obtains the precoding for the SRS transmission of the SRS resource set for non-codebook-based uplink transmission based on this associated CSI-RS resource.

For non-codebook-based uplink transmission, in actual systems, it is generally necessary to measure the downlink configured CSI-RS. The terminal 10 utilizes the reciprocity between uplink and downlink to obtain uplink channel information through the measurement of downlink signals. The main processes include:

the network device configures associated downlink CSI-RS for non-codebook-based transmission for terminal downlink channel sounding;

the terminal selects a precoding matrix through calculation of the downlink channel, and simultaneously sends SRS on the configured SRS resource set in the beam direction of each precoding;

the network device performs uplink channel detection on the SRS, performs resource scheduling for the UE, and notifies the UE through downlink signaling, while selecting the beam in the precoding matrix through SRI indication;

the terminal uses the modified precoding matrix to determine the actual precoding and the allowed number of layers, and sends the PUSCH; the terminal determines the limitation of the precoding indication according to the higher layer parameter maxRank. The number of SRS resources indicated by SRI is not greater than maxRank. To achieve the network device's modification of the precoding matrix actually used by the terminal, for non-codebook-based transmission, the network device needs to configure one SRS resource set for the terminal.

For the non-codebook transmission scheme, the network device can configure one SRS resource set for the terminal, containing 1 to 4 SRS resources, and each SRS resource contains 1 SRS port. When the network device configures multiple SRS resources for the terminal for non-codebook uplink transmission, the multiple SRS resources have the same time domain type, that is, all SRS resources are periodic SRS, or semi-persistent SRS, or aperiodic SRS. The network device can indicate one or more SRS resources to the terminal through SRI for determining PUSCH precoding. The number of SRS resources corresponding to SRI is the number of streams for PUSCH transmission. When the network device configures only 1 SRS resource for the terminal for non-codebook uplink transmission, the DCI for uplink grant does not contain the SRI indication field.

FIG. 1e is a schematic flowchart of a non-codebook-based uplink transmission method according to an embodiment of the present disclosure. This embodiment of the present disclosure relates to a non-codebook-based uplink transmission method, performed by a terminal 10 and a network device 20. The method includes:

In Step 510, the network device 20 sends a Channel State Information-Reference Symbol (CSI-RS).

In the non-codebook-based uplink transmission process, the precoding matrix is no longer limited to a fixed candidate set. The network device 20 sends CSI-RS to the terminal 10. The execution order of step 510 and step 520 is not fixed, which is not limited in this application.

In Step 520, the network device 20 sends SRS resource configuration.

The network device 20 sends SRS resource configuration information to the terminal 10. The SRS resource configuration includes at least one SRS resource and the time-frequency resource location of each SRS resource. The execution order of step 510 and step 520 is not fixed, which is not limited in this application.

In Step 530, the terminal 10 determines possible precoding matrices based on the CSI-RS.

The terminal 10 calculates by itself based on the measurement results of the CSI-RS to obtain at least one possible precoding matrix.

In Step 540, the terminal 10 sends an SRS.

The terminal 10 sends at least one SRS to the network device 20 based on the SRS resource configuration.

In Step 550, the network device 20 sends DCI.

The network device 20 obtains the channel conditions of each uplink channel based on the received at least one SRS and sends DCI to the terminal 10. The DCI includes at least SRI.

In Step 560, the terminal 10 sends a PUSCH.

The terminal 10 determines the precoding matrix to be used this time among the possible precoding matrices based on the SRI, and sends the PUSCH to the network device 20 based on the SRI and the precoding matrix used this time.

In this embodiment of the present disclosure, the specific method indicated by the SRI indication field for non-codebook transmission is shown in the following tables. Lmax is the transmission layer number limit configured by the network device 20. The terminal 10 determines the corresponding table of SRI and the number of bits of the SRI indication field according to this parameter configuration. Among them, Table 4 has Lmax=1, Table 5 has Lmax=2, Table 6 has Lmax=3, and Table 7 has Lmax=4.

Table 4

| bit field mapped to index | SRI(s), $N_{SRS}=2$ | bit field mapped to index | SRI(s), $N_{SRS}=3$ | bit field mapped to index | SRI(s), $N_{SRS}=4$ |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 5

| bit field mapped to index | SRI(s), $N_{SRS}=2$ | bit field mapped to index | SRI(s), $N_{SRS}=3$ | bit field mapped to index | SRI(s), $N_{SRS}=4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 6

| bit field mapped to index | SRI(s), $N_{SRS}=2$ | bit field mapped to index | SRI(s), $N_{SRS}=3$ | bit field mapped to index | SRI(s), $N_{SRS}=4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |

(continued)

| bit field mapped to index | SRI(s), $N_{SRS}=2$ | bit field mapped to index | SRI(s), $N_{SRS}=3$ | bit field mapped to index | SRI(s), $N_{SRS}=4$ |
|---|---|---|---|---|---|
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 7

| bit field mapped to index | SRI(s), $N_{SRS}=2$ | bit field mapped to index | SRI(s), $N_{SRS}=3$ | bit field mapped to index | SRI(s), $N_{SRS}=4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

FIG. 2 is a schematic interaction diagram of an information reporting method and/or receiving method according to an embodiment of the present disclosure. As shown in FIG. 2, this embodiment of the present disclosure relates to an information reporting method and/or receiving method, used in a communication system 100. The method includes: In Step 201, the terminal 10 sends fifth information to the network device 20.

In some embodiments, the network device 20 receives the fifth information sent by the terminal 10.

In some embodiments, the fifth information is, for example, a terminal capability value set, or capability value sequence information, or at least two capability values, or at least two SRS port numbers.

In some embodiments, the fifth information is used to indicate the maximum number of SRS ports supported by different panels of the terminal 10. In an embodiment, the fifth information is used to indicate the maximum number of SRS ports supported by different panels of the terminal 10 used for uplink multi-panel transmission. The uplink multi-panel transmission is uplink simultaneous transmission or uplink non-simultaneous transmission.

For example, the terminal 10 includes four panels: panel#0, panel#1, panel#2, panel#3. The maximum numbers of SRS ports supported by the four panels are 4, 4, 2, and 2 respectively. Then the terminal capability value set can be represented as {4, 2} or {2, 4}.

For another example, the terminal 10 includes four panels: panel#0, panel#1, panel#2, panel#3. The maximum numbers of SRS ports supported by the four panels are 1, 2, 2, and 4 respectively. Then the terminal capability value set can be represented as {1, 2, 4} or {4, 2, 1} or {2, 4, 1}, etc.

In some embodiments, the step of sending the fifth information includes: sending information for reporting terminal capability, where the information for reporting terminal capability carries the fifth information. In an embodiment, the information for reporting terminal capability is capability information, terminal capability information, capability reporting information, etc.

In some embodiments, the step of receiving the fifth information includes: receiving information for reporting terminal capability, where the information for reporting terminal capability carries the fifth information. In an embodiment, the information for reporting terminal capability is capability information, terminal capability information, capability reporting information, etc.

In Step 202, the network device 20 sends sixth information to the terminal 10.

In some embodiments, the terminal 10 receives the sixth information sent by the network device 20.

In some embodiments, the sixth information is, for example, beam grouping configuration, or group-based beam configuration, or beam grouping division information, or beam pair division information.

In some embodiments, the sixth information is used to indicate at least one beam group. In an embodiment, the sixth information is used to indicate at least one beam group for uplink multi-panel transmission. In an embodiment, the sixth information is used to indicate at least one beam group for beam measurement.

In some embodiments, each beam group can be considered as a beam pair. In some embodiments, each beam group includes at least two beams, and does not exceed the maximum number of beams. The maximum number of beams may be the maximum number of beams for uplink multi-panel transmission, or the maximum number of beams for uplink simultaneous transmission, or the maximum number of beams for uplink non-simultaneous transmission. The maximum number of beams is predefined by the communication protocol or configured by the network device 20.

In some embodiments, the beam pair is a beam pair supporting uplink transmission; or, the beam pair is a beam pair supporting uplink multi-panel transmission; or, the beam pair is a beam pair supporting uplink simultaneous transmission; or, the beam pair is a beam pair supporting uplink non-simultaneous transmission.

In some embodiments, the beam pair includes two beams. The beam may be an uplink beam, or a beam supporting uplink transmission, or a beam supporting uplink multi-panel transmission. In some embodiments, the beam pair includes more than two beams, such as 4 beams or 8 beams, etc., which is not limited in the present disclosure.

In some embodiments, the step of sending the sixth information includes: sending first configuration information. The first configuration information is, for example, beam-related configuration. The first configuration information carries the sixth information. The first configuration information may be configuration related to beams, or beam management, or beam measurement. The first configuration information may be a Radio Resource Control (RRC) message, DCI, or a Medium Access Control Control Element (MAC CE).

In some embodiments, the step of receiving the sixth information includes: receiving first configuration information. The first configuration information is, for example, beam-related configuration. The first configuration information carries the sixth information.

In Step 203, the network device 20 sends a first parameter to the terminal 10.

In some embodiments, the terminal 10 receives the first parameter sent by the network device 20.

In some embodiments, the first parameter is, for example, "report terminal capability value index".

In some embodiments, the first parameter is a parameter related to the reporting configuration of the second information, or the first parameter is used to indicate whether to report the second information. In some embodiments, the first parameter is used to indicate whether to report the second information simultaneously when reporting the first information.

In some embodiments, the first parameter is represented as the parameter "UE capability value set index", but the specific name of the first parameter is not limited in the embodiments of the present disclosure.

In some embodiments, the step of sending the first parameter includes: sending second configuration information. The second configuration information is, for example, measurementrelated configuration. The second configuration information carries the first parameter. The second configuration information is configuration related to at least one of beam measurement, beam reporting, and beam management. In an embodiment, the second configuration information may be a channel state information report configuration (CSI-reportconfig).

In some embodiments, the step of receiving the first parameter includes: receiving second configuration information. The second configuration information is, for example, measurementrelated configuration. The second configuration information carries the first parameter.

In some embodiments, when the first parameter is configured to an enabled state (enable), it indicates that the terminal 10 starts the function of reporting the second information, or starts the function of reporting the second information simultaneously when reporting the first information. In some embodiments, when the first parameter is configured to a disabled state, it indicates that the function of reporting the second information is turned off, or the function of reporting the second information simultaneously when reporting the first information is turned off.

In the case where this parameter is configured to the enabled state, the terminal 10 performs step 204.

In Step 204, the terminal 10 reports first information and second information.

In some embodiments, the network device 20 receives the first information and the second information sent by the terminal 10.

In some embodiments, the first information is used to indicate beam information of at least one beam pair. In some embodiments, the first information is used to indicate at least one of at least one beam pair and measurement results of the at least one beam pair. For example, the first information is an identifier of at least one beam pair; for another example, the first information is a measurement result of at least one beam pair.

In some embodiments, the beam information of the at least one beam pair includes: at least one of an identifier for identifying a beam or beam pair, an index for identifying a beam or beam pair, a measurement result of a beam or beam pair, and a transmission type supported by a beam or beam pair.

In some embodiments, the identifier or index for identifying a beam or beam pair may be indicated by at least one of a beam identifier, a beam pair identifier, spatial relation information, spatial setting, spatial reception parameter (spatial Rx parameter), transmission filter (Tx spatial filter), spatial domain reception filter (spatial domain receive filter), spatial domain transmission filter, Transmission Configuration Indication (TCI) state, QCL Type D, etc.

In some embodiments, the measurement result of the beam or beam pair includes: at least one of CRI, SSB RI, L1-RSRP, and L1-SINR.

In some embodiments, the transmission type refers to at least one of uplink transmission, uplink multi-panel transmission, uplink simultaneous transmission, uplink non-simultaneous transmission, downlink transmission, downlink multi-panel transmission, downlink simultaneous transmission, and downlink non-simultaneous transmission.

In some embodiments, the second information is a terminal capability value index of at least one beam pair. The terminal capability value index is short for terminal capability value set index.

In some embodiments, the second information is used to indicate the maximum number of SRS ports supported by at least two antenna panels. Or, the second information is used to indicate the maximum number of SRS ports supported by at least two antenna panels corresponding to at least one beam pair. Or, the second information is used to indicate the maximum number of SRS ports supported by at least two homogeneous panels corresponding to at least one beam pair.

In some embodiments, the second information is an index of the above maximum number of SRS ports in the terminal capability value set.

In some embodiments, the at least two panels corresponding to the beam pair are homogeneous panels. In some embodiments, the at least two panels are panels with the same capability. In some embodiments, the at least two panels are panels that support the same maximum number of SRS ports. In some embodiments, the at least two panels are panels that support the same maximum rank or maximum number of layers.

In some embodiments, the number of beams in the beam pair is the same as the number of panels of the at least two panels. In other words, the at least two beams in the beam pair correspond one-to-one with the at least two panels.

In some embodiments, each piece of second information occupies 1 bit or 2 bits.

In one embodiment, the terminal capability value index is used to indicate the maximum number of SRS ports of the at least two antenna panels corresponding to the beam pair through an index value. Different index values may correspond to different maximum numbers of SRS ports.

In one embodiment, taking uplink simultaneous transmission as an example, the terminal 10 can perform beam management, such as beam measurement and reporting, for the network device 20 to select and indicate the beam pair or antenna panel for uplink multi-panel transmission. For example, beam measurement may include: the terminal 10 receives multiple CSI-RS resources or multiple SSB resources indicated by the base station through TCI, etc., measures all CSI-RS resources or SSB resources, and determines the CRI or SSBRI suitable for uplink simultaneous transmission. This CRI or SSBRI corresponds to at least two beams suitable for uplink simultaneous transmission, that is, one beam pair.

For example, the terminal 10 has 4 antenna panels: panel#0, panel#1, panel#2, panel#3. The maximum numbers of SRS ports supported by the four antenna panels are 4, 4, 2, and 2 respectively. Then the terminal capability value set UE capability value set pre-reported by the terminal 10 to the network device 20 can be defined as {4, 2}. Assuming that the antenna panels corresponding to the beam pair currently to be reported are panel#0 and panel#1, the terminal capability value set index is UE capability value set index#0, which indicates that the maximum number of SRS ports supported by the at least two antenna panels is 4; assuming that the antenna panels corresponding to the beam pair currently to be reported are panel#2 and panel#3, the terminal capability value set index is UE capability value set index#1, which indicates that the maximum number of SRS ports supported by the at least two antenna panels is 2. Here, the terminal capability value index UE capability value set index#0 can also be simplified as cap_index0, and the terminal capability value index UE capability value set index#1 can also be simplified as cap_index1 or other representations, which is not limited in this application.

In one example, the first information and the second information are represented as: {CRI0+L1-RSRP0; CRI1+L1-RSRP1, cap_index0}. Here, "CRI0+L1-RSRP0" represents the measurement result of the first beam in the beam pair, corresponding to panel#0; "CRI1+L1-RSRP1" represents the measurement result of the second beam in the beam pair, corresponding to panel#1; "cap_index0" represents that the maximum number of SRS ports supported by the two antenna panels is 4.

In some embodiments, sending the first information and the second information includes: sending fourth information, where the fourth information carries the first information and the second information. In some embodiments, the fourth information is a beam report, or information for reporting beam measurement results.

In some embodiments, the fourth information is at least one of:

a group-based beam report;
a group-based downlink beam report;
a group-based uplink beam report;
a capability report;
independent signaling.

In some embodiments, the above second information is second information corresponding respectively to the at least one beam pair. For example, the content carried by the fourth information is exemplarily as follows:

{beam information of beam pair 1, first terminal capability value index corresponding to beam pair 1;
beam information of beam pair 2, second terminal capability value index corresponding to beam pair 2;
beam information of beam pair 3, third terminal capability value index corresponding to beam pair 3};

Here, the terminal capability value indexes corresponding to different beam pairs may be the same or different, or partially the same and partially different.

In some embodiments, the above second information is one piece of second information corresponding to the at least one beam pair. For example,
{beam information of beam pair 1, beam information of beam pair 2, beam information of beam pair 3, fourth terminal capability value index};

In this reporting manner, the second information of different beam pairs is the same.

In some embodiments, receiving the first information and the second information includes: receiving fourth information, where the fourth information carries the first information and the second information. In some embodiments, the fourth information is a beam report, or information for reporting beam measurement results.

In Step 205, the network device 20 schedules the terminal 10.

In some embodiments, the network device 20 schedules uplink multi-panel transmission of the terminal 10. The uplink multi-panel transmission may also be called uplink multi-TRP transmission. The uplink multi-panel transmission is uplink simultaneous transmission or uplink non-simultaneous transmission.

In some embodiments, the network device 20 determines the beam pair to be used for this scheduling based on the first information.

In some embodiments, the network device 20 determines the scheduling parameters to be used for this scheduling based on the second information. In some embodiments, the scheduling parameters include: at least one of the number of ports, the number of layers, the rank, and the precoding matrix used for uplink multi-panel transmission.

In Step 206, the terminal 10 reports first information and does not report second information.

In some embodiments, the network device 20 receives the first information sent by the terminal 10.

In some embodiments, the second information of a first beam pair has been reported, and the second information of the first beam pair is not reported again.

In some embodiments, the second information of a first beam pair has not changed, and the second information of the first beam pair is not reported again;

In some embodiments, the third information has not changed, and the second information of a first beam pair is not reported again. In some embodiments, the third information is a maximum rank (maxRank), which is configured by the network device 20. The maximum rank is configured on a terminal granularity, or a beam pair granularity, or a panel granularity.

Here, the first beam pair includes one or more beam pairs of the at least one beam pair.

In some embodiments, the terminal 10 reports the first information and does not report the second information when the condition is met. The condition is used to indicate that the second information of the first beam pair has been reported; in some embodiments, the condition is used to indicate that the second information of the first beam pair has not changed compared to the historically reported second information.

In one example, the above fourth information carries the first information of the measured multiple beam pairs and the second information of some beam pairs. For example,

{beam information of beam pair 1, first terminal capability value index corresponding to beam pair 1;
beam information of beam pair 2, empty;
beam information of beam pair 3, third terminal capability value index corresponding to beam pair 2}; this means that the terminal capability value index of beam pair 2 has been reported and does not need to be reported again.

In another example, the above fourth information only carries the first information of the measured multiple beam pairs. For example, {beam information of beam pair 1, beam information of beam pair 2, beam information of beam pair 3}; this means that the second information of beam pair 1, beam pair 2, and beam pair 3 has not changed compared to the historical reporting situation, or has not changed compared to the last reporting situation, and does not need to be reported again.

In Step 207, the network device 20 schedules the terminal 10.

In some embodiments, the network device 20 schedules uplink multi-panel transmission of the terminal 10. The uplink multi-panel transmission may also be called uplink multi-TRP transmission. The uplink multi-panel transmission is uplink simultaneous transmission or uplink non-simultaneous transmission.

In some embodiments, the network device 20 determines the beam pair to be used for this scheduling based on the first information of at least one beam pair (including the first beam pair) received this time.

In some embodiments, the network device 20 determines the scheduling parameters to be used for this scheduling based on the second information of at least one beam pair (including the historically received second information of the first beam pair). In some embodiments, the scheduling parameters include: at least one of the number of ports, the number of layers, the rank, and the precoding matrix used for uplink multi-panel transmission.

In this embodiment of the present disclosure, steps 201, 202, 203, 205, 206, and 207 are optional. In different embodiments, one or more of these steps may be omitted or substituted. Steps 202 and 203 may be exchanged in order or executed simultaneously.

In addition, step 201 can be implemented as an independent embodiment, for example, separately implemented as an information configuration method;

step 202 can be implemented as an independent embodiment, for example, separately implemented as an information configuration method;
step 203 can be implemented as an independent embodiment, for example, separately implemented as a parameter configuration method;
step 204 can be implemented as an independent embodiment, for example, separately implemented as an information reporting method;
step 205 can be implemented as an independent embodiment, for example, separately implemented as a scheduling method;
step 206 can be implemented as an independent embodiment, for example, separately implemented as an information reporting method;
step 207 can be implemented as an independent embodiment, for example, separately implemented as a scheduling method;
steps 201 and 202 can be implemented as an independent embodiment; steps 201 and 203 can be implemented as an independent embodiment; steps 201 and 204 can be implemented as an independent embodiment; steps 201 and 206 can be implemented as an independent embodiment; steps 202 and 203 can be implemented as an independent embodiment; steps 202 and 204 can be implemented as an independent embodiment; steps 202 and 206 can be implemented as an independent embodiment; steps 203 and 204 can be implemented as an independent embodiment; steps 203 and 206 can be implemented as an independent embodiment; steps 204 and 206 can be implemented as an independent embodiment; steps 201 to 203 can be implemented as an independent embodiment; steps 201, 202, and 204 can be implemented as an independent embodiment; steps 201, 202, and 206 can be implemented as an independent embodiment; steps 201, 203, and 204 can be implemented as an independent embodiment; steps 201, 203, and 206 can be implemented as an independent embodiment; steps 201, 204, and 206 can be implemented as an independent embodiment; steps 202, 203, and 204 can be implemented as an independent embodiment; steps 202, 203, and 206 can be implemented as an independent embodiment; steps 202, 204, and 206 can be implemented as an independent embodiment; steps 203, 204, and 206 can be implemented as an independent embodiment; steps 201 to 204 can be implemented as an independent embodiment; steps 201 to 203 and 206 can be implemented as an independent embodiment; steps 201, 202, 204, and 206 can be implemented as an independent embodiment; steps 201, 203, 204, and 206 can be implemented as an independent embodiment; steps 202, 203, 204, and 206 can be implemented as an independent embodiment; steps 201 to 203, 204, and 206 can be implemented as an independent embodiment, but are not limited thereto.

In some embodiments, step 202 is omitted, and each beam pair can be predefined by the protocol or implemented autonomously by the terminal 10.

In some embodiments, step 203 is omitted, and the function indicated by the first parameter is in a default enabled state, or implemented autonomously by the terminal 10.

FIG. 3a is a schematic flowchart of an information reporting method according to an embodiment of the present disclosure. As shown in FIG. 3a, this embodiment of the present disclosure relates to an information reporting method,

performed by a terminal 10. The method includes:

In Step 301, fifth information is sent.

Optional implementations of step 301 can be referred to the optional implementations of step 201 in FIG. 2, and are not repeated here.

In some implementations, the terminal 10 sends the fifth information to the network device 20, but may also send the fifth information to other entities.

In Step 302, sixth information is obtained.

Optional implementations of step 302 can be referred to the optional implementations of step 202 in FIG. 2, and are not repeated here.

In some implementations, the terminal 10 receives the sixth information from the network device 20, but may also receive the sixth information from other entities.

In some implementations, the terminal 10 obtains the sixth information specified by the protocol.

In some implementations, the terminal 10 processes to obtain the sixth information, or the terminal 10 autonomously generates the sixth information.

In Step 303, a first parameter is obtained.

Optional implementations of step 303 can be referred to the optional implementations of step 203 in FIG.2, and are not repeated here.

In some implementations, the terminal 10 receives the first parameter from the network device 20, but may also receive the first parameter from other entities.

In some implementations, the terminal 10 obtains the first parameter specified by the protocol.

In some implementations, the terminal 10 processes to obtain the first parameter, or the terminal 10 autonomously generates the first parameter.

In Step 304, first information and second information are reported.

Optional implementations of step 304 can be referred to the optional implementations of step 204 in FIG. 2, and are not repeated here.

In an embodiment, the first information and the second information appear in pairs on a beam pair granularity.

In some embodiments, the first information and the second information are used for the network device 20 to schedule the terminal 10. In some embodiments, the first information and the second information are used for the network device 20 to schedule uplink multi-panel transmission of the terminal 10. In some embodiments, the first information is used to determine the beam pair used for uplink multi-panel transmission, and the second information is used to determine the scheduling parameters used for uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information and the second information to the network device 20, but may also report to other entities.

In Step 305, first information is reported and second information is not reported.

Optional implementations of step 305 can be referred to the optional implementations of step 206 in FIG. 2, and are not repeated here.

In an embodiment, the first information reported this time and the historically reported second information are used for the network device 20 to schedule the terminal 10. In some embodiments, the first information reported this time and the historically reported second information are used for the network device 20 to schedule uplink multi-panel transmission of the terminal 10. In some embodiments, the first information reported this time is used to determine the beam pair used for the next uplink multi-panel transmission, and the historically reported second information is used to determine the scheduling parameters used for the next uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information to the network device 20, but may also report to other entities.

In this embodiment of the present disclosure, steps 301, 302, 303, and 305 are optional. In different embodiments, one or more of these steps may be omitted or substituted. Steps 301 and 302 may be exchanged in order or executed simultaneously, steps 301 and 303 may be exchanged in order or executed simultaneously, and steps 302 and 303 may be exchanged in order or executed simultaneously.

In addition, step 301 can be implemented as an independent embodiment, for example, separately implemented as an information configuration method;

step 302 can be implemented as an independent embodiment, for example, separately implemented as an information configuration method;

step 303 can be implemented as an independent embodiment, for example, separately implemented as a parameter configuration method;

step 304 can be implemented as an independent embodiment, for example, separately implemented as an information reporting method;

step 305 can be implemented as an independent embodiment, for example, separately implemented as an information reporting method;

steps 301 and 302 can be implemented as an independent embodiment; steps 301 and 303 can be implemented as an independent embodiment; steps 301 and 304 can be implemented as an independent embodiment; steps 301 and 305 can be implemented as an independent embodiment; steps 302 and 303 can be implemented as an independent embodiment; steps 302 and 304 can be implemented as an independent embodiment; steps 302 and 305 can be implemented as an independent embodiment; steps 303 and 304 can be implemented as an independent embodiment; steps 303 and 305 can be implemented as an independent embodiment; steps 304 and 305 can be implemented as an independent embodiment; steps 301 to 303 can be implemented as an independent embodiment; steps 301, 302, and 304 can be implemented as an independent embodiment; steps 301, 302, and 305 can be implemented as an independent embodiment; steps 301, 303, and 304 can be implemented as an independent embodiment; steps 301, 303, and 305 can be implemented as an independent embodiment; steps 301, 304, and 305 can be implemented as an independent embodiment; steps 302, 303, and 304 can be implemented as an independent embodiment; steps 302, 303, and 305 can be implemented as an independent embodiment; steps 302, 304, and 305 can be implemented as an independent embodiment; steps 303 to 305 can be implemented as an independent embodiment; steps 301 to 304 can be implemented as an independent embodiment; steps 301 to 303 and 305 can be implemented as an independent embodiment; steps 301, 302, 304, and 305 can be implemented as an independent embodiment; steps 301, 303 to 305 can be implemented as an independent embodiment; steps 302 to 305 can be implemented as an independent embodiment; steps 301 to 305 can be implemented as an independent embodiment, but are not limited thereto.

In some embodiments, step 303 is omitted, and the function indicated by the first parameter is in a default enabled state, or implemented autonomously by the terminal 10.

FIG. 3b is a schematic flowchart of an information reporting method according to an embodiment of the present disclosure. As shown in FIG. 3b, this embodiment of the present disclosure relates to an information reporting method, performed by a terminal 10. The method includes:

In Step 311, first information and second information are reported.

Optional implementations of step 311 can be referred to the optional implementations of step 204 in FIG. 2 or step 304 in FIG. 3a, and are not repeated here.

In an embodiment, the first information and the second information appear in pairs on a beam pair granularity.

In some embodiments, the first information and the second information are used for the network device 20 to schedule the terminal 10. In some embodiments, the first information and the second information are used for the network device 20 to schedule uplink multi-panel transmission of the terminal 10. In some embodiments, the first information is used to determine the beam pair used for uplink multi-panel transmission, and the second information is used to determine the scheduling parameters used for uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information and the second information to the network device 20, but may also report to other entities.

In Step 312, first information is reported and second information is not reported.

Optional implementations of step 312 can be referred to the optional implementations of step 206 in FIG. 2 or step 305 in FIG. 3a, and are not repeated here.

In an embodiment, the first information reported this time and the historically reported second information are used for the network device 20 to schedule the terminal 10. In some embodiments, the first information reported this time and the historically reported second information are used for the network device 20 to schedule uplink multi-panel transmission of the terminal 10. In some embodiments, the first information reported this time is used to determine the beam pair used for the next uplink multi-panel transmission, and the historically reported second information is used to determine the scheduling parameters used for the next uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information to the network device 20, but may also report to other entities.

In this embodiment of the present disclosure, step 312 is an optional step.

In this embodiment of the present disclosure, step 311 can be implemented as an independent embodiment, and step 312 can be implemented as an independent embodiment. Steps 311 to 312 can be implemented as an independent

# EP 4 679 909 A1

embodiment.

In this embodiment of the present disclosure, step 311 can be combined with step 305 in FIG. 3a, and step 312 can be combined with step 304 in FIG. 3a.

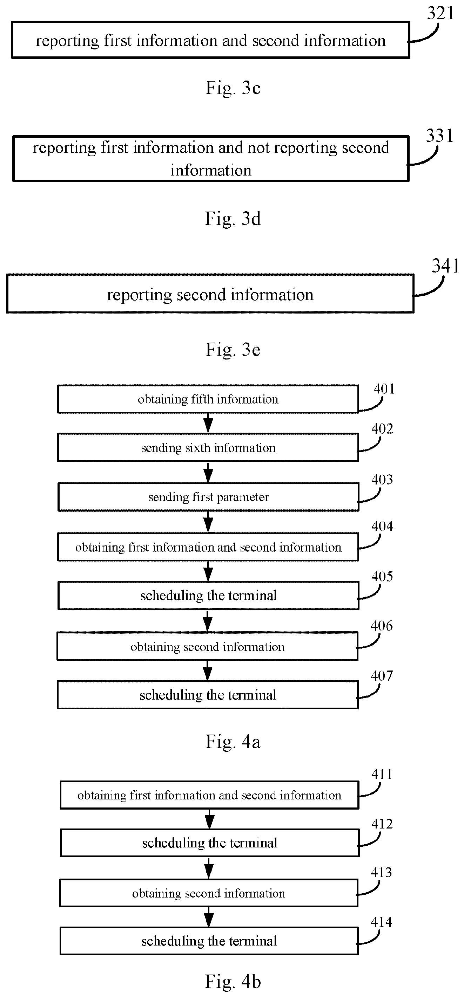

FIG. 3c is a schematic flowchart of an information reporting method according to an embodiment of the present disclosure. As shown in FIG. 3c, this embodiment of the present disclosure relates to an information reporting method, performed by a terminal 10. The method includes:

In Step 321, first information and second information are reported.

Optional implementations of step 321 can be referred to the optional implementations of step 204 in FIG. 2, or step 304 in FIG. 3a, or step 311 in FIG. 3b, and are not repeated here.

In an embodiment, the first information and the second information appear in pairs on a beam pair granularity.

In some embodiments, the first information and the second information are used for the network device 20 to schedule the terminal 10. In some embodiments, the first information and the second information are used for the network device 20 to schedule uplink multi-panel transmission of the terminal 10. In some embodiments, the first information is used to determine the beam pair used for uplink multi-panel transmission, and the second information is used to determine the scheduling parameters used for uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information and the second information to the network device 20, but may also report to other entities.

FIG. 3d is a schematic flowchart of an information reporting method according to an embodiment of the present disclosure. As shown in FIG. 3d, this embodiment of the present disclosure relates to an information reporting method, performed by a terminal 10. The method includes:

In Step 331, first information is reported and second information is not reported.

Optional implementations of step 331 can be referred to the optional implementations of step 206 in FIG. 2, or step 305 in FIG. 3a, or step 312 in FIG. 3b, and are not repeated here.

In an embodiment, the first information reported this time and the historically reported second information are used for the network device 20 to schedule the terminal 10. In some embodiments, the first information reported this time and the historically reported second information are used for the network device 20 to schedule uplink multi-panel transmission of the terminal 10. In some embodiments, the first information reported this time is used to determine the beam pair used for the next uplink multi-panel transmission, and the historically reported second information is used to determine the scheduling parameters used for the next uplink multi-panel transmission. In some embodiments, the scheduling parameters include: at least one of the number of ports, the number of layers, the rank, and the precoding matrix used for uplink multi-panel transmission.

In some implementations, the terminal 10 reports the first information to the network device 20, but may also report to other entities.

FIG. 3e is a schematic flowchart of an information reporting method according to an embodiment of the present disclosure. As shown in FIG. 3e, this embodiment of the present disclosure relates to an information reporting method, performed by a terminal 10. The method includes:

In Step 341, second information is reported.

In some embodiments, only the second information is reported.

In some embodiments, reporting the second information includes reporting the first information and the second information.

Optional implementations of step 341 can be referred to step 204 in FIG. 2, or at least one of steps 301 to 305 in FIG. 3a, or step 311 in FIG. 3b, or step 321 in FIG. 3c, and are not repeated here.

In some implementations, the terminal 10 reports the second information to the network device 20, but may also report to other entities.

FIG. 4a is a schematic flowchart of an information receiving method according to an embodiment of the present disclosure. As shown in FIG. 4a, this embodiment of the present disclosure relates to an information receiving method, performed by a network device 20. The method includes:

In Step 401, fifth information is obtained.

Optional implementations of step 401 can be referred to the optional implementations of step 201 in FIG. 2, and are not repeated here.

In some implementations, the network device 20 receives the fifth information from the terminal 10, but may also receive the fifth information from other entities.

In some implementations, the network device 20 obtains the fifth information specified by the protocol.

In some implementations, the network device 20 processes to obtain the fifth information, or the network device 20 autonomously generates the fifth information.

In Step 402, sixth information is sent.

Optional implementations of step 402 can be referred to the optional implementations of step 202 in FIG. 2, and are not repeated here.

In some embodiments, the sixth information is used by the terminal 10 to determine the division manner of one or more beam pairs.

In some implementations, the network device 20 sends the sixth information to the terminal 10, but may also send it to other entities.

In Step 403, a first parameter is sent.

Optional implementations of step 403 can be referred to the optional implementations of step 203 in FIG. 2, and are not repeated here.

In some embodiments, the first parameter is used by the terminal 10 to determine whether to report the terminal capability value index.

In some implementations, the network device 20 sends the first parameter to the terminal 10, but may also send it to other entities.

In Step 404, first information and second information are obtained.

Optional implementations of step 404 can be referred to the optional implementations of step 204 in FIG. 2, and are not repeated here.

In some implementations, the network device 20 receives the first information and the second information from the terminal 10, but may also receive them from other entities.

In some implementations, the network device 20 obtains the first information and the second information specified by the protocol.

In some implementations, the network device 20 processes to obtain the first information and the second information, or the network device 20 autonomously generates the first information and the second information.

In Step 405, the terminal 10 is scheduled.

Optional implementations of step 405 can be referred to the optional implementations of step 205 in FIG. 2, and are not repeated here.

In some embodiments, the scheduling is used to schedule uplink multi-panel transmission of the terminal 10.

In Step 406, first information is obtained.

Optional implementations of step 406 can be referred to the optional implementations of step 206 in FIG. 2, and are not repeated here.

In some embodiments, the first information is the first information of a first beam pair.

In some embodiments, the first information is reported by the terminal 10 in the case where the second information of the first beam pair has been reported, or in the case where the second information of the first beam pair has not changed, or in the case where the third information has not changed, where the first beam pair includes one or more beam pairs of the at least one beam pair. In some embodiments, the third information is the maximum rank.

In some implementations, the network device 20 receives the first information from the terminal 10, but may also receive it from other entities.

In some implementations, the network device 20 obtains the first information specified by the protocol.

In some implementations, the network device 20 performs a processing to obtain the first information, or the network device 20 autonomously generates the first information.

In Step 407, the terminal 10 is scheduled.

Optional implementations of step 407 can be referred to the optional implementations of step 207 in FIG. 2, and are not repeated here.

In this embodiment of the present disclosure, steps 401, 402, 403, 405, 406, and 407 are optional. In different embodiments, one or more of these steps may be omitted or substituted; steps 401 and 402 may be exchanged in order or executed simultaneously, steps 401 and 403 may be exchanged in order or executed simultaneously, and steps 402 and 403 may be exchanged in order or executed simultaneously.

In addition, step 401 can be implemented as an independent embodiment, for example, separately implemented as an information configuration method;

step 402 can be implemented as an independent embodiment, for example, separately implemented as an information configuration method;

step 403 can be implemented as an independent embodiment, for example, separately implemented as a parameter configuration method;

step 404 can be implemented as an independent embodiment, for example, separately implemented as an information receiving method;

step 405 can be implemented as an independent embodiment, for example, separately implemented as a scheduling method;

step 406 can be implemented as an independent embodiment, for example, separately implemented as an information receiving method;

step 407 can be implemented as an independent embodiment, for example, separately implemented as a scheduling method;

steps 401 and 402 can be implemented as an independent embodiment; steps 401 and 403 can be implemented as an independent embodiment; steps 401 and 404 can be implemented as an independent embodiment; steps 401 and 406 can be implemented as an independent embodiment; steps 402 and 403 can be implemented as an independent embodiment; steps 402 and 404 can be implemented as an independent embodiment; steps 402 and 406 can be implemented as an independent embodiment; steps 403 and 404 can be implemented as an independent embodiment; steps 403 and 406 can be implemented as an independent embodiment; steps 404 and 406 can be implemented as an independent embodiment; steps 401 to 403 can be implemented as an independent embodiment; steps 401, 402, and 404 can be implemented as an independent embodiment; steps 401, 402, and 406 can be implemented as an independent embodiment; steps 401, 403, and 404 can be implemented as an independent embodiment; steps 401, 403, and 406 can be implemented as an independent embodiment; steps 401, 404, and 406 can be implemented as an independent embodiment; steps 402, 403, and 404 can be implemented as an independent embodiment; steps 402, 403, and 406 can be implemented as an independent embodiment; steps 402, 404, and 406 can be implemented as an independent embodiment; steps 403, 404, and 406 can be implemented as an independent embodiment; steps 401 to 404 can be implemented as an independent embodiment; steps 401 to 403 and 406 can be implemented as an independent embodiment; steps 401, 402, 404, and 406 can be implemented as an independent embodiment; steps 401, 403, 404, and 406 can be implemented as an independent embodiment; steps 402, 403, 404, and 406 can be implemented as an independent embodiment; steps 401 to 403, 404, and 406 can be implemented as an independent embodiment, but are not limited thereto.

In some embodiments, step 403 is omitted, and the function indicated by the first parameter is in a default enabled state, or implemented autonomously by the terminal 10.

FIG. 4b is a schematic flowchart of an information receiving method according to an embodiment of the present disclosure. As shown in FIG. 4b, this embodiment of the present disclosure relates to an information receiving method, performed by a network device 20. The method includes:

In Step 411, first information and second information are obtained.

Optional implementations of step 411 can be referred to the optional implementations of step 204 in FIG. 2 or step 404 in FIG. 4a, and are not repeated here.

In some implementations, the network device 20 receives the first information and the second information from the terminal 10, but may also receive them from other entities.

In some implementations, the network device 20 obtains the first information and the second information specified by the protocol.

In some implementations, the network device 20 processes to obtain the first information and the second information, or the network device 20 autonomously generates the first information and the second information.

In Step 412, the terminal 10 is scheduled.

Optional implementations of step 412 can be referred to the optional implementations of step 205 in FIG. 2 or step 405 in FIG. 4a, and are not repeated here.

In some embodiments, the scheduling is used to schedule uplink multi-panel transmission of the terminal 10.

In Step 413, second information is obtained.

Optional implementations of step 413 can be referred to the optional implementations of step 206 in FIG. 2 or step 406 in FIG. 4a, and are not repeated here.

In some embodiments, the first information is the first information of a first beam pair.

In some embodiments, the first information is reported by the terminal 10 in the case where the second information of the first beam pair has been reported, or in the case where the second information of the first beam pair has not changed, or in the case where the third information has not changed, where the first beam pair includes one or more beam pairs of the at least one beam pair. In some embodiments, the third information is the maximum rank.

In some implementations, the network device 20 receives the second information from the terminal 10, but may also receive it from other entities.

In some implementations, the network device 20 obtains the second information specified by the protocol.

In some implementations, the network device 20 performs a processing to obtain the second information, or the network device 20 autonomously generates the second information.

In Step 414, the terminal 10 is scheduled.

Optional implementations of step 414 can be referred to the optional implementations of step 207 in FIG. 2 or step 407 in FIG. 4a, and are not repeated here.

In this embodiment of the present disclosure, steps 412, 413, and 414 are optional. In different embodiments, one or more of these steps may be omitted or substituted.

In addition, step 411 can be implemented as an independent embodiment, for example, separately implemented as an information receiving method;

step 412 can be implemented as an independent embodiment, for example, separately implemented as a scheduling method;
step 413 can be implemented as an independent embodiment, for example, separately implemented as an information receiving method;
step 414 can be implemented as an independent embodiment, for example, separately implemented as a scheduling method;
steps 411 and 412 can be implemented as an independent embodiment; steps 413 and 414 can be implemented as an independent embodiment, but are not limited thereto.

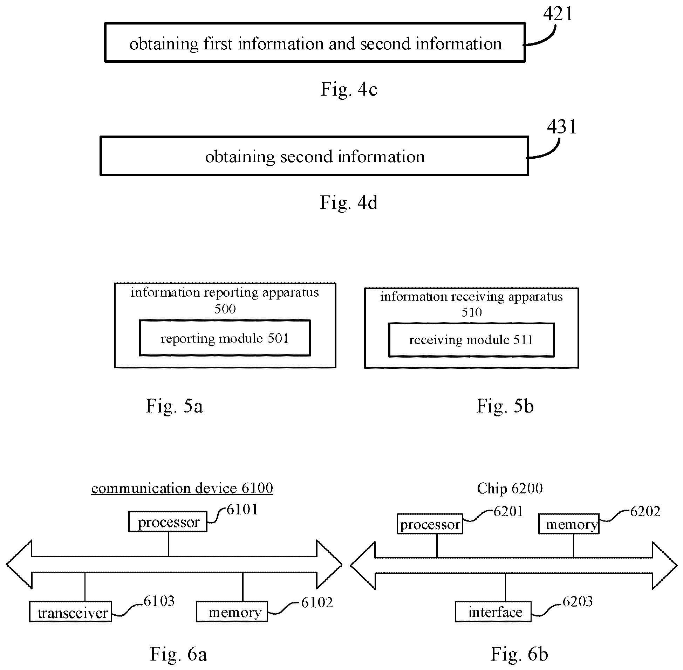

FIG. 4c is a schematic flowchart of an information receiving method according to an embodiment of the present disclosure. As shown in FIG. 4c, this embodiment of the present disclosure relates to an information receiving method, performed by a network device 20. The method includes:
In Step 421, first information and second information are obtained.

Optional implementations of step 421 can be referred to the optional implementations of step 204 in FIG. 2, or step 404 in FIG. 4a, or step 411 in FIG. 4b, and are not repeated here.

In some embodiments, the first information and the second information are sent by the terminal 10.

In some implementations, the network device 20 receives the first information and the second information from the terminal 10, but may also receive them from other entities.

In some implementations, the network device 20 obtains the first information and the second information specified by the protocol.

In some implementations, the network device 20 processes to obtain the first information and the second information, or the network device 20 autonomously generates the first information and the second information.

FIG. 4d is a schematic flowchart of an information receiving method according to an embodiment of the present disclosure. As shown in FIG. 4d, this embodiment of the present disclosure relates to an information receiving method, performed by a network device 20. The method includes:
In Step 431, second information is obtained.

In some embodiments, only the second information is received.

In some embodiments, receiving the second information includes receiving the first information and the second information.

Optional implementations of step 431 can be referred to step 204 in FIG. 2, or at least one of steps 401 to 404 in FIG. 4a, or step 411 in FIG. 4b, or step 421 in FIG. 4c, and are not repeated here.

In some implementations, the network device 20 receives the second information from the terminal 10, but may also receive it from other entities.

In some implementations, the network device 20 obtains the second information specified by the protocol.

In some implementations, the network device 20 processes to obtain the second information, or the network device 20 autonomously generates the second information.

This embodiment of the present disclosure relates to an information reporting method, which provides a beam reporting scheme for the case where the terminal 10's uplink transmission only supports homogeneous panels. The specific methods are as follows:
In a first possible design, based on enhanced measurement reporting of downlink groupBasedBeamReporting, the terminal 10 correspondingly reports beam pair(s) supporting uplink simultaneous transmission or uplink non-simultaneous transmission, and the network device 20 receives the beam pair(s). Here, downlink groupBasedBeamReporting corresponds to the fourth information in the above embodiments.

In an embodiment, the enhancement for the capability value reporting part is:

In some embodiments, each beam pair reports one capability value index (capability value Index) (1 or 2 bits). Here, the beam pair corresponds to the first information in the above embodiments, and the capability value index corresponds to the second information in the above embodiments. The specific implementation details of this implementation can be referred to at least step 204 in FIG. 2, or step 304 in FIG. 3a, or step 311 in FIG. 3b, or step 321 in FIG. 3c, or step 341 in FIG. 3e;
In some embodiments, multiple beam pairs report one capability value index (capability value Index) (1 or 2 bits). Here, the beam pair corresponds to the first information in the above embodiments, and the capability value index corresponds to the second information in the above embodiments. The specific implementation details of this implementation can be referred to at least step 204 in FIG. 2, or step 304 in FIG. 3a, or step 311 in FIG. 3b, or step 321 in FIG. 3c, or step 341 in FIG. 3e;

In some embodiments, the capability value index is not reported. Here, the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d;

In some embodiments, when the terminal 10 has independently reported a single capability value of homogeneous panels supporting uplink multi-panel transmission in the capability report, the capability value index is not reported. Here, the single capability value of homogeneous panels supporting uplink multi-panel transmission corresponds to the first information in the above embodiments, and the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d;

In some embodiments, when the corresponding maximum rank (maxRank) has not changed from the last report, the capability value index is not reported. Here, the maximum rank corresponds to the third information in the above embodiments, and the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d.

In a second possible design, based on a newly defined group-based uplink beam reporting (groupBasedUplinkBeamReporting), the terminal 10 correspondingly reports beam pair(s) supporting uplink simultaneous transmission or uplink non-simultaneous transmission, and the network device 20 receives the beam pair(s). Here, group-based uplink beam reporting corresponds to the fourth information in the above embodiments.

In an embodiment, the enhancement for the capability value reporting part is:

In some embodiments, each beam pair reports one capability value index (capability value Index) (1 or 2 bits). Here, the beam pair corresponds to the first information in the above embodiments, and the capability value index corresponds to the second information in the above embodiments. The specific implementation details of this implementation can be referred to at least step 204 in FIG. 2, or step 304 in FIG. 3a, or step 311 in FIG. 3b, or step 321 in FIG. 3c, or step 341 in FIG. 3e;

In some embodiments, multiple beam pairs report one capability value index (capability value Index) (1 or 2 bits). Here, the beam pair corresponds to the first information in the above embodiments, and the capability value index corresponds to the second information in the above embodiments. The specific implementation details of this implementation can be referred to at least step 204 in FIG. 2, or step 304 in FIG. 3a, or step 311 in FIG. 3b, or step 321 in FIG. 3c, or step 341 in FIG. 3e;

In some embodiments, the capability value index is not reported. Here, the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d;

In some embodiments, when the terminal 10 has independently reported a single capability value of homogeneous panels supporting uplink multi-panel transmission in the capability report, the capability value index is not reported. Here, the single capability value of homogeneous panels supporting uplink multi-panel transmission corresponds to the first information in the above embodiments, and the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d;

In some embodiments, when the corresponding maximum rank (maxRank) has not changed from the last report, the capability value index is not reported. Here, the maximum rank corresponds to the third information in the above embodiments, and the capability value index corresponds to the second information in the above embodiments. The specific implementation details of this implementation can be referred to at least step 206 in FIG. 2, or step 305 in FIG. 3a, or step 312 in FIG. 3b, or step 331 in FIG. 3d.

In some embodiments, when group-based beam reporting (groupBasedBeamReporting) in the channel state information report configuration (CSI-reportconfig) is set to "enabled", the first possible design or the second possible design described above is executed.

In this embodiment of the present disclosure, steps 511, 521, 531, 5311, 5312, 541, 551, 561, 5611, 5612 can be implemented as independent embodiments;

steps 5311 and 5312 can be implemented as an independent embodiment, and steps 5611 and 5612 can be implemented as an independent embodiment.

In this embodiment of the present disclosure, part or all of the steps, their optional implementation manners can be arbitrarily combined with part or all of the steps in other embodiments, and can also be arbitrarily combined with the optional implementation manners of other embodiments.

The embodiments of the present disclosure also provide an apparatus for implementing any of the above methods. For example, an apparatus is provided. The apparatus includes units for performing the steps executed by the terminal in any of the above methods. For another example, another apparatus is provided, including units for performing the steps executed by the network device (e.g., access network device, core network function node, core network device, etc.) in any of the above methods. It should be understood that the division of units in the above apparatus is only a division of logical functions. In actual implementation, they can be fully or partially integrated into one physical entity, or can be physically separated. In addition, the units in the apparatus can be implemented in the form of software called by a processor: for example, the apparatus includes a processor. The processor is connected to a memory. Instructions are stored in the memory. The processor calls the instructions stored in the memory to implement any of the above methods or to implement the functions of the units of the above apparatus. The processor is, for example, a generalpurpose processor, such as a Central Processing Unit (CPU) or a microprocessor. The memory is a memory inside the apparatus or a memory outside the apparatus. Alternatively, the units in the apparatus can be implemented in the form of hardware circuits. The functions of some or all units can be implemented by designing the hardware circuits. The hardware circuits can be understood as one or more processors. For example, in one implementation, the hardware circuit is an Application-Specific Integrated Circuit (ASIC). The logical relationships of the components inside the circuit are designed to implement the functions of some or all of the units. For another example, in another implementation, the hardware circuit can be implemented by a Programmable Logic Device (PLD). Taking a Field Programmable Gate Array (FPGA) as an example, it can include a large number of logic gate circuits. The connection relationships between the logic gate circuits are configured through configuration files to implement the functions of some or all of the units. All units of the above apparatus can be fully implemented by the processor calling software, or fully implemented by hardware circuits, or partially implemented by the processor calling software and the remaining part is implemented by hardware circuits.

In the embodiments of the present disclosure, a processor is a circuit with signal processing capability. In one implementation, the processor can be a circuit with instruction reading and running capability, such as a CPU, a microprocessor, a Graphics Processing Unit (GPU) (which can be understood as a type of microprocessor), a Digital Signal Processor (DSP), etc.; in another implementation, the processor can implement functions through the logical relationships of hardware circuits. The logical relationships of the hardware circuits are fixed or reconfigurable. For example, the processor is an ASIC, or a hardware circuit implemented by a PLD, such as an FPGA. In a reconfigurable hardware circuit, the process of the processor loading configuration documents to implement hardware circuit configuration can be understood as the process of the processor loading instructions to implement the functions of some or all of the units. In addition, it can be a hardware circuit designed for artificial intelligence, which can be understood as an ASIC, such as a Neural-network Processing Unit (NPU), a Tensor Processing Unit (TPU), a Deep learning Processing Unit (DPU), etc.

FIG. 5a is a schematic structural diagram of an information reporting apparatus according to an embodiment of the present disclosure. As shown in FIG. 5a, the information reporting apparatus 500 includes: a reporting module 501.

The reporting module 501 is configured to report first information and second information; where the first information is used to indicate beam information of at least one beam pair, and the second information is used to indicate a maximum quantity of SRS ports supported by at least two panels corresponding to the at least one beam pair.

In an embodiment, the reporting module 501 is further configured to perform steps related to reporting in the above method embodiments.

FIG. 5b is a schematic structural diagram of an information receiving apparatus according to an embodiment of the present disclosure. As shown in FIG. 5b, the information receiving apparatus 510 includes: a receiving module 511.

The receiving module 511 is configured to receive first information and second information reported by a terminal; where the first information is used to indicate beam information of at least one beam pair, and the second information is used to indicate a maximum quantity of SRS ports supported by at least two panels corresponding to the at least one beam pair.

In an embodiment, the receiving module 511 is further configured to perform steps related to receiving in the above method embodiments.

FIG. 6a is a schematic structural diagram of a communication device 6100 according to an embodiment of the present disclosure. The communication device 6100 can be a network device (e.g., an access network device, a core network device, etc.), or a terminal (e.g., user equipment, etc.), or a chip, chip system, or processor that supports the network device to implement any of the above methods, or a chip, chip system, or processor that supports the terminal to implement any of the above methods. The communication device 6100 can be used to implement the methods described in the above method embodiments. For details, refer to the descriptions in the above method embodiments.

As shown in FIG. 6a, the communication device 6100 includes one or more processors 6101. The processor 6101 is configured to call instructions to cause the communication device 6100 to perform any of the above methods.

In an embodiment, the communication device 6100 also includes one or more memories 6102 for storing instructions. In an optional embodiment, all or part of the memory 6102 may also be located outside the communication device 6100.

In an embodiment, the communication device 6100 also includes one or more transceivers 6103. When the communication device 6100 includes one or more transceivers 6103, the communication steps such as sending and receiving in the above methods are performed by the transceiver 6103, and other steps are performed by the processor 6101.

The communication device 6100 in the above embodiment description can be a network device or a terminal, but the scope of the communication device 6100 described in the present disclosure is not limited thereto. The structure of the communication device can be free of be limited by FIG. 6a. The communication device can be an independent device or can be part of a larger device. For example, the communication device can be: (1) an independent Integrated Circuit (IC), or chip, or chip system or subsystem; (2) a set of one or more ICs, optionally, the IC set can also include storage components for storing data and programs; (3) an ASIC, such as a modem; (4) a module that can be embedded in other devices; (5) a receiver, terminal, smart terminal, cellular phone, wireless device, handset, mobile unit, in-vehicle device, network device, cloud device, artificial intelligence device, etc.; (6) others, etc.

FIG. 6b is a schematic structural diagram of a chip 6200 provided by an embodiment of the present disclosure. For the case where the communication device 6100 can be a chip or chip system, refer to the schematic structural diagram of the chip 6200 shown in FIG. 6b, but it is not limited thereto.

In some embodiments, the chip 6200 performs any of the above methods.

In some embodiments, the chip 6200 includes one or more processors 6201. The processor 6201 is configured to call instructions to cause the chip 6200 to perform any of the above methods.

In an embodiment, the chip 6200 also includes one or more memories 6202 for storing instructions. In an optional embodiment, all or part of the memory 6202 may be located outside the chip 6200.

In an embodiment, the chip 6200 also includes one or more interfaces 6203. The interface 6203 is connected to the memory 6202. The interface 6203 can be used to receive signals from the memory 6202 or other devices. The interface 6203 can be used to send signals to the memory 6202 or other devices. For example, the interface 6203 can read instructions stored in the memory 6202 and send the instructions to the processor 6201.

In some embodiments, terms such as interface, interface circuit, transceiver pin, transceiver, etc. can be replaced with each other.

The present disclosure also provides a storage medium having instructions stored thereon. When the instructions are run on the communication device 6100, the communication device 6100 is caused to perform any of the above methods. In an embodiment, the storage medium is an electronic storage medium. In an embodiment, the storage medium is a computer-readable storage medium, but may also be a storage medium readable by other devices. In an embodiment, the storage medium may be a non-transitory storage medium, but may also be a transitory storage medium.

The present disclosure also provides a program product. When the program product is executed by the communication device 6100, the communication device 6100 is caused to perform any of the above methods. In an embodiment, the program product is a computer program product.

**Claims**

1. An information reporting method, performed by a terminal, comprising:

   reporting first information and second information;
   wherein the first information is used to indicate beam information of at least one beam pair, and the second information is used to indicate a maximum quantity of sounding reference signal (SRS) ports supported by at least two panels corresponding to the at least one beam pair.

2. The method according to claim 1, wherein the second information comprises:
   second information corresponding respectively to the at least one beam pair.

3. The method according to claim 1, wherein the second information comprises:
   one piece of second information corresponding to the at least one beam pair.

4. The method according to any one of claims 1 to 3, wherein each piece of the second information occupies 2 bits.

5. The method according to any one of claims 1 to 4, wherein each of the at least one beam pair is a beam pair supporting an uplink simultaneous transmission or a beam pair supporting an uplink non-simultaneous transmission.

6. The method according to any one of claims 1 to 5, wherein

   the at least two panels are homogeneous panels; or
   the at least two panels support a same maximum quantity of SRS ports.

7. The method according to any one of claims 1 to 6, further comprising at least one of the following features:

   in a case where a reporting of the second information of a first beam pair is complete, not reporting the second information of the first beam pair again;
   in a case where the second information of a first beam pair has not changed, not reporting the second information of the first beam pair again; or
   in a case where third information has not changed, not reporting the second information of a first beam pair again;
   wherein the first beam pair comprises one or more of the at least one beam pair.

8. The method according to any one of claims 1 to 7, wherein reporting the first information and the second information comprises:
   reporting fourth information carrying the first information and the second information.

9. The method according to claim 8, wherein the fourth information is at least one of:

   a group-based beam report;
   a group-based downlink beam report; or
   a group-based uplink beam report.

10. The method according to any one of claims 1 to 9, wherein reporting the first information and the second information comprises:

    reporting the first information and the second information in a case where a first parameter is configured to be enabled;
    wherein the first parameter is related to a reporting configuration of the second information.

11. An information receiving method, performed by a network device, comprising:

    receiving first information and second information reported by a terminal;
    wherein the first information is used to indicate beam information of at least one beam pair, and the second information is used to indicate a maximum quantity of sounding reference signal (SRS) ports supported by at least two panels corresponding to the at least one beam pair.

12. The method according to claim 11, wherein the second information comprises:
    second information corresponding respectively to the at least one beam pair.

13. The method according to claim 11, wherein the second information comprises:
    one piece of second information corresponding to the at least one beam pair.

14. The method according to any one of claims 11 to 13, wherein each piece of the second information occupies 2 bits.

15. The method according to any one of claims 11 to 14, wherein each of the at least one beam pair is a beam pair supporting an uplink simultaneous transmission or a beam pair supporting an uplink non-simultaneous transmission.

16. The method according to any one of claims 11 to 15, wherein

    the at least two panels are homogeneous panels; or
    the at least two panels support a same maximum quantity of SRS ports.

17. The method according to any one of claims 11 to 16, wherein receiving the first information and the second information reported by the terminal comprises:
    receiving fourth information reported by the terminal, wherein the fourth information carries the first information and the second information.

18. The method according to claim 17, wherein the fourth information is at least one of:

    a group-based beam report;
    a group-based downlink beam report; or

a group-based uplink beam report.

19. The method according to any one of claims 11 to 18, wherein receiving the first information and the second information reported by the terminal comprises:

in a case where a first parameter is configured to be enabled, receiving the first information and the second information reported by the terminal;
wherein the first parameter is related to a reporting configuration of the second information.

20. An information reporting method, performed by a communication system, wherein the communication system comprises a terminal and a network device, and the method comprises:

reporting, by the terminal, first information and second information;
receiving, by the network device, the first information and the second information reported by the terminal;
wherein the first information is used to indicate beam information of at least one beam pair, and the second information is used to indicate a maximum quantity of sounding reference signal (SRS) ports supported by at least two panels corresponding to the at least one beam pair.

21. An information reporting apparatus, comprising:

a reporting module configured to report first information and second information;
wherein the first information is used to indicate beam information of at least one beam pair, and the second information is used to indicate a maximum quantity of sounding reference signal (SRS) ports supported by at least two panels corresponding to the at least one beam pair.

22. An information receiving apparatus, comprising:

a receiving module configured to receive first information and second information reported by a terminal;
wherein the first information is used to indicate beam information of at least one beam pair, and the second information is used to indicate a maximum quantity of sounding reference signal (SRS) ports supported by at least two panels corresponding to the at least one beam pair.

23. A communication device, comprising:

one or more processors;
wherein the one or more processors are configured to call instructions to cause the communication device to perform the information reporting method according to any one of claims 1 to 10 or the information receiving method according to any one of claims 11 to 19.

24. A communication system, comprising a terminal and a network device, wherein the terminal is configured to implement the information reporting method according to any one of claims 1 to 10, and the network device is configured to implement the information receiving method according to any one of claims 11 to 19.

25. A storage medium, having stored therein instructions that, when run on a communication device, cause the communication device to perform the information reporting method according to any one of claims 1 to 10 or the information receiving method according to any one of claims 11 to 19.

26. A program product, wherein in a case where the program product is executed by a communication device, the communication device is caused to perform the information reporting method according to any one of claims 1 to 10 or the information receiving method according to any one of claims 11 to 19.

Fig. 1a

Fig. 1b

Network device
20

TRP 1

PDCCH 1

PUSCH 1

Panel 1

Panel 2

PDCCH 2

PUSCH 2

TRP 2

UE 10

Fig. 1c

| UE 10 | | network device 20 |
|---|---|---|

410:sending SRS resource
configuration

420: sending SRS

430: sending DCI（SRI, TPMI, TRI）

440: sending PUSCH

Fig. 1d

| UE 10 | | network device 20 |
|---|---|---|

510: sending CSI-RS

520: sending SRS resource
configuration

530: determining possible
precoding matrices based on the
CSI-RS

540: sending SRS

550: sending DCI（SRI）

560: sending PUSCH

Fig. 1e

UE 10 | network device 20

201: sending fifth information (e.g., terminal capability value set)

202: sending sixth information (e.g., beam grouping configuration)

203: sending a first parameter (e.g., reporting terminal capability value index)

204: reporting first information (e.g., identifier of at least one beam pair) and second information (e.g., terminal capability value index of at least one beam pair)

205: scheduling the terminal

206: reports first information and not reporting second information

207: scheduling the terminal

Fig. 2

sending fifth information — 301

obtaining sixth information — 302

obtaining first parameter — 303

reporting first information and second information — 304

reporting first information and not reporting second information — 305

Fig. 3a

reporting first information and second information — 311

reporting first information and not reporting second information — 312

Fig. 3b

reporting first information and second information — 321

Fig. 3c

reporting first information and not reporting second information — 331

Fig. 3d

reporting second information — 341

Fig. 3e

obtaining fifth information — 401

↓

sending sixth information — 402

↓

sending first parameter — 403

↓

obtaining first information and second information — 404

↓

scheduling the terminal — 405

↓

obtaining second information — 406

↓

scheduling the terminal — 407

Fig. 4a

obtaining first information and second information — 411

↓

scheduling the terminal — 412

↓

obtaining second information — 413

↓

scheduling the terminal — 414

Fig. 4b

obtaining first information and second information    421

Fig. 4c

obtaining second information    431

Fig. 4d

information reporting apparatus
500

reporting module 501

Fig. 5a

information receiving apparatus
510

receiving module 511

Fig. 5b

communication device 6100

processor    6101

transceiver    6103

memory    6102

Fig. 6a

Chip 6200

processor    6201    memory    6202

interface    6203

Fig. 6b

## INTERNATIONAL SEARCH REPORT

| International application No. |
|---|
| **PCT/CN2023/079941** |

**A. CLASSIFICATION OF SUBJECT MATTER**

H04W72/044(2023.01)i

According to International Patent Classification (IPC) or to both national classification and IPC

**B. FIELDS SEARCHED**

Minimum documentation searched (classification system followed by classification symbols)

IPC:H04W,H04Q,H04L,H04B

Documentation searched other than minimum documentation to the extent that such documents are included in the fields searched

Electronic data base consulted during the international search (name of data base and, where practicable, search terms used)

WPABSC, CNTXT, CJFD, ENTXT, VEN, DWPI, IEEE, 3GPP: 信息, 上报, 波束对, 面板, 支持, 最大, 探测参考信号, 端口, 数, information, report, wave, pair, panel, support, max, SRS, port, number

**C. DOCUMENTS CONSIDERED TO BE RELEVANT**

| Category* | Citation of document, with indication, where appropriate, of the relevant passages | Relevant to claim No. |
|---|---|---|
| X | CN 108111272 A (ZTE CORP.) 01 June 2018 (2018-06-01)<br>description, paragraphs [0064]-[0367] | 1-26 |
| X | CN 113489577 A (ZTE CORP.) 08 October 2021 (2021-10-08)<br>description, paragraphs [0065]-[0366] | 1-26 |
| A | CN 109150453 A (CHINA ACADEMY OF TELECOMMUNICATIONS TECHNOLOGY)<br>04 January 2019 (2019-01-04)<br>entire document | 1-26 |
| A | CN 108092697 A (ZTE CORP.) 29 May 2018 (2018-05-29)<br>entire document | 1-26 |
| A | CN 113597001 A (HUAWEI TECHNOLOGIES CO., LTD.) 02 November 2021 (2021-11-02)<br>entire document | 1-26 |
| A | WO 2018204340 A1 (IDAC HOLDING INC.) 08 November 2018 (2018-11-08)<br>entire document | 1-26 |
| A | US 2020267536 A1 (QUALCOMM INC.) 20 August 2020 (2020-08-20)<br>entire document | 1-26 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 August 2023** | **17 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | | | | International application No. | | | |
| --- | --- | --- | --- | --- | --- | --- | --- |
| | | | | **PCT/CN2023/079941** | | | |
| Patent document cited in search report | | | Publication date (day/month/year) | Patent family member(s) | | | Publication date (day/month/year) |
| CN | 108111272 | A | 01 June 2018 | EP | 3667978 | A1 | 17 June 2020 |
| | | | | EP | 3667978 | A4 | 12 August 2020 |
| | | | | MX | 2020001552 | A | 03 August 2020 |
| | | | | KR | 20220054449 | A | 02 May 2022 |
| | | | | US | 2020177416 | A1 | 04 June 2020 |
| | | | | US | 11451414 | B2 | 20 September 2022 |
| | | | | JP | 2020529797 | A | 08 October 2020 |
| | | | | JP | 7293191 | B2 | 19 June 2023 |
| | | | | WO | 2019029378 | A1 | 14 February 2019 |
| | | | | US | 2023068244 | A1 | 02 March 2023 |
| | | | | RU | 2729213 | C1 | 05 August 2020 |
| | | | | KR | 20200035300 | A | 02 April 2020 |
| | | | | US | 2023239090 | A1 | 27 July 2023 |
| CN | 113489577 | A | 08 October 2021 | None | | | |
| CN | 109150453 | A | 04 January 2019 | JP | 2020523920 | A | 06 August 2020 |
| | | | | JP | 7296892 | B2 | 23 June 2023 |
| | | | | WO | 2018228119 | A1 | 20 December 2018 |
| | | | | JP | 2023063413 | A | 09 May 2023 |
| | | | | EP | 3641203 | A1 | 22 April 2020 |
| | | | | EP | 3641203 | A4 | 24 June 2020 |
| | | | | TW | 201906445 | A | 01 February 2019 |
| | | | | TWI | 692264 | B | 21 April 2020 |
| | | | | US | 2020244334 | A1 | 30 July 2020 |
| | | | | KR | 20200017481 | A | 18 February 2020 |
| | | | | KR | 102346979 | B1 | 03 January 2022 |
| CN | 108092697 | A | 29 May 2018 | WO | 2018206017 | A1 | 15 November 2018 |
| | | | | WO | 2018206017 | A9 | 22 August 2019 |
| CN | 113597001 | A | 02 November 2021 | None | | | |
| WO | 2018204340 | A1 | 08 November 2018 | TW | 201906466 | A | 01 February 2019 |
| | | | | WO | 2018204340 | A8 | 21 March 2019 |
| US | 2020267536 | A1 | 20 August 2020 | WO | 2020168246 | A1 | 20 August 2020 |
| | | | | US | 2020266875 | A1 | 20 August 2020 |
| | | | | US | 11265066 | B2 | 01 March 2022 |
| | | | | TW | 202046651 | A | 16 December 2020 |
| | | | | US | 11223413 | B2 | 11 January 2022 |

Form PCT/ISA/210 (patent family annex) (July 2022)